(19)

Europäisches
Patentamt
European
Patent Office
Office européen
des brevets

(11)  **EP 1 967 721 A2**

(12)  **EUROPEAN PATENT APPLICATION**

(43) Date of publication:
    **10.09.2008 Bulletin 2008/37**

(21) Application number: **07023862.1**

(22) Date of filing: **10.12.2007**

(51) Int Cl.:
    *F02D 41/40* (2006.01)    *F02M 63/02* (2006.01)
    *F02M 59/36* (2006.01)

(84) Designated Contracting States:
    **AT BE BG CH CY CZ DE DK EE ES FI FR GB GR**
    **HU IE IS IT LI LT LU LV MC MT NL PL PT RO SE**
    **SI SK TR**
    Designated Extension States:
    **AL BA HR MK RS**

(30) Priority: **08.03.2007 JP 2007058010**

(71) Applicant: **Hitachi, Ltd.**
    **Chiyoda-ku**
    **Tokyo 100-8280 (JP)**

(72) Inventor: **Okamoto, Takashi**
    **6-1, Marunouchi 1-chome**
    **Chiyoda-ku**
    **Tokyo 100-8220 (JP)**

(74) Representative: **Beetz & Partner**
    **Steinsdorfstrasse 10**
    **80538 München (DE)**

(54)  **High-pressure fuel pump control device for internal combustion engine**

(57)    The present invention provides a high-pressure fuel pump control device of an internal combustion engine, which enables accurate fuel pressure control up to high-speed rotations using a high-pressure fuel pump 1 having a normal-close type solenoid valve 8. The control device controls a pump comprising: a fluid charging passage 10; a fluid discharging passage 11; a pressurized chamber 12 which connects the charging passage 10 and the discharging passage 11; a pressing member 2 which transfers the fluid in the pressurized chamber 12 to the discharging passage 11; a discharging valve 6 provided in the discharging passage 11; and a solenoid valve 8 which opens at the time of power distribution, the solenoid valve 8 being provided in the charging passage 10; wherein a standard signal for outputting an ON signal for driving the solenoid valve 8 is provided in the compression stroke of the pump.

*FIG.2*

**Description**

BACKGROUND OF THE INVENTION

1. Field of the Invention

The present invention relates to an apparatus of an internal combustion engine to be mounted on an automobile and more particularly to a high-pressure fuel supply system having a high-pressure fuel pump.

2. Description of the Related Art

The reduction of emission gas substances contained in automobile emission gas such as carbon monoxide (CO), hydrocarbon (HC), nitrogen oxide ($NO_x$), etc. is demanded of present automobiles from a viewpoint of environmental protection. Presently, direct injection engines are developed for the purpose of reducing these substances. With a direct injection engine, an injector performs fuel injection directly into a combustion chamber of a cylinder. The particle diameter of the fuel injected from the injector is decreased so as to facilitate combustion of the injected fuel, thus leading to reduced emission gas substances and improved engine power.

In order to decrease the particle diameter of the fuel injected from the injector, means for increasing the pressure of fuel is required, and various techniques of high-pressure fuel pumps for transferring high-pressure fuel to the injector are proposed.

For example, JP-A-2006-250086 discloses a technique concerning a high-pressure fuel pump having a normal close type solenoid valve.

SUMMARY OF THE INVENTION

With a high-pressure fuel pump having a normal close type solenoid valve, unless an appropriate phase for a power distribution start/end request is calculated by a phase calculation unit in the high-pressure fuel pump control device and power distribution is started or ended by a driving signal output unit in the control device according to the requested phase, an unexpected pressure rise or fall occurs in the accumulator (hereinafter referred to as common rail), and a target fuel pressure for realizing optimal combustion is not achieved, resulting in degraded combustion stability and emission gas performance.

The present invention has been devised in view of the above-mentioned problem. An object of the present invention is to provide a high-pressure fuel pump control device of an internal combustion engine that contributes to the stabilization of the fuel system and combustion and the improvement of emission gas performance by calculating an appropriate phase for a power distribution start/end request by the phase calculation unit in the control device and by starting or ending power distribution according to the requested phase by the driving signal output unit in the control device, in a high-pressure fuel pump device having a normal close type solenoid valve.

According to one aspect of the present invention, a control device controls a pump comprising: a fluid charging passage; a fluid discharging passage; a pressurized chamber which connects the charging passage and the discharging passage; a pressing member which transfers the fluid in the pressurized chamber to the discharging passage; a discharging valve provided in the discharging passage; and a solenoid valve which opens at the time of power distribution, the solenoid valve being provided in the charging passage, wherein a standard signal for outputting an ON signal for driving the solenoid valve is provided in the compression stroke of the pump.

The high-pressure fuel pump control device of an internal combustion engine according to the present invention makes it possible to calculate an appropriate phase for a power distribution start/end request by the phase calculation unit in the control device and start or end power distribution according to the requested phase by the driving signal output unit in the control device, thus contributing to the stabilization of the fuel system and combustion and the improvement of emission gas performance.

BRIEF DESCRIPTION OF THE DRAWINGS

Fig. 1 is an overall configuration of an engine having a high-pressure fuel pump control device of an internal combustion engine according to the present embodiment.
Fig. 2 is an internal block diagram of the engine control device of Fig. 1.
Fig. 3 is an overall block diagram of a fuel system having the high-pressure fuel pump of Fig. 1.
Fig. 4 is a longitudinal sectional view of the high-pressure fuel pump of Fig. 3.

Fig. 5 is an operation timing chart of the high-pressure fuel pump of Fig. 3.

Fig. 6 is a supplementary diagram for the operation timing chart of Fig. 5.

Fig. 7 is a block diagram showing control by the internal combustion engine control device of Fig. 1 according to the present invention.

Fig. 8 is a block diagram showing control by the internal combustion engine control device of Fig. 1 according to the present invention.

Fig. 9 is a block diagram showing control by the internal combustion engine control device of Fig. 1 according to the present invention.

Fig. 10 is a time chart showing control by the internal combustion engine control device of Fig. 1 according to the present invention.

Fig. 11 is a block diagram showing control by the internal combustion engine control device of Fig. 1 according to the present invention.

Fig. 12 is a graph showing discharge quantitative characteristics of the high-pressure fuel pump of Fig. 3.

Fig. 13 is a time chart showing control by the internal combustion engine control device of Fig. 1 according to the present invention.

Fig. 14 is a state transition diagram showing control by the internal combustion engine control device of Fig. 1 according to the present invention.

Fig. 15 is a time chart showing control by the internal combustion engine control device of Fig. 1 according to the present invention.

Fig. 16 is a time chart showing control by the internal combustion engine control device of Fig. 1 according to the present invention.

Fig. 17 is a time chart showing control by the internal combustion engine control device of Fig. 1 according to the present invention.

Fig. 18 is a block diagram showing control by the internal combustion engine control device of Fig. 1 according to the present invention.

Fig. 19 is a time chart showing control by the internal combustion engine control device of Fig. 1 according to the present invention.

Fig. 20 is a time chart showing control by the internal combustion engine control device of Fig. 1 according to the present invention.

Fig. 21 is a time chart showing control by the internal combustion engine control device of Fig. 1 according to the present invention.

Fig. 22 is a time chart showing control by the internal combustion engine control device of Fig. 1 according to the present invention.

Fig. 23 is a time chart showing control by the internal combustion engine control device of Fig. 1 according to the present invention.

Fig. 24 is a time chart showing control by the internal combustion engine control device of Fig. 1 according to the present invention.

Fig. 25 is a time chart showing control by the internal combustion engine control device of Fig. 1 according to the present invention.

Fig. 26 is a time chart showing control by the internal combustion engine control device of Fig. 1 according to the present invention.

Fig. 27 is a time chart showing control by the internal combustion engine control device of Fig. 1 according to the present invention.

Fig. 28 is a time chart showing control by the internal combustion engine control device of Fig. 1 according to the present invention.

Fig. 29 is a time chart showing control by the internal combustion engine control device of Fig. 1 according to the present invention.

Fig. 30 is a time chart showing control by the internal combustion engine control device of Fig. 1 according to the present invention.

Fig. 31 is a time chart showing control by the internal combustion engine control device of Fig. 1 according to the present invention.

Fig. 32 is a time chart showing control by the internal combustion engine control device of Fig. 1 according to the present invention.

Fig. 33 is a time chart showing control by the internal combustion engine control device of Fig. 1 according to the present invention.

Fig. 34 is a diagram explaining an exemplary effect by the internal combustion engine control device of Fig. 1 according to the present invention.

DETAILED DESCRIPTION OF THE PREFERRED EMBODIMENTS

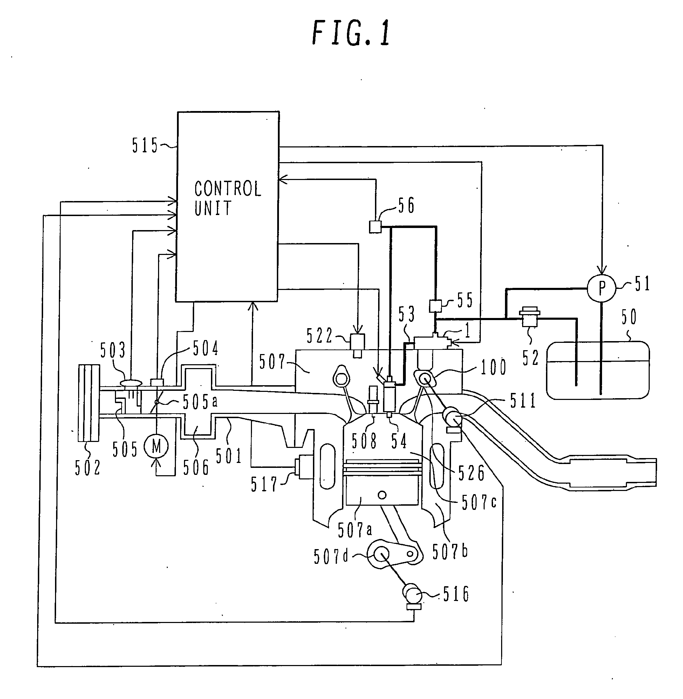

An embodiment of a high-pressure fuel supply control device of an internal combustion engine according to the present invention will be explained with reference to the accompanying drawings. Fig. 1 is an overall configuration of a control device of a direct injection engine 507 according to the present embodiment. Although the direct injection engine 507 is composed of four cylinders, one of them will be explained below. For air introduction to a cylinder 507b, air is taken from the entrance of an air cleaner 502, passes through an air flow meter (air flow sensor 503) and then through a throttle body 505 which contains an electronic throttle valve 505a for controlling the charging flow rate, and then enters a collector 506. The air charged by the collector 506 is distributed to each charging pipe 501 connected to each cylinder 507b of the direct injection engine 507 and then led to a combustion chamber 507c formed by a piston 507a, the cylinder 507b, etc. Further, a signal indicating the charging flow rate outputted from the air flow sensor 503 is fed to an engine control system (control unit 515) having a high-pressure fuel pump control device according to the present embodiment. Further, a throttle sensor 504 for detecting an opening of the electronic throttle valve 505a is provided on the throttle body 505, and a signal therefrom is also fed to the control unit 515.

On the other hand, fuel such as the gasoline from a fuel tank 50 is primarily pressurized by a low-pressure fuel pump 51, controlled to a fixed pressure (for example, 3 kg/cm2) by a fuel pressure regulator 52, and secondarily pressurized to a higher pressure (for example, 50 kg/cm2) by a high-pressure fuel pump 1 to be mentioned hereinafter. Then, the fuel is injected from an injector (hereinafter referred to as injector 54) provided in each cylinder 507b through a common rail 53 into the combustion chamber 507c. The fuel injected into the combustion chamber 507c is ignited by an ignition plug 508 based on an ignition signal whose voltage is stepped up by an ignition coil 522.

A crank angle sensor (hereinafter referred to as position sensor 516) attached to a crank shaft 507d of the direct injection engine 507 outputs a signal indicating a rotational position of the crank shaft 507d to the control unit 515. Further, a cam angle sensor (hereinafter referred to as phase sensor 511) attached to a cam shaft (not shown) provided in a mechanism that varies the open/close timing of an exhaust valve 526 outputs an angle signal indicating a rotational position of the cam shaft to the control unit 515 and also outputs to the control unit 515 an angle signal indicating a rotational position of a pump drive cam 100 of the high-pressure fuel pump 1 rotating with the rotation of the cam shaft of the exhaust valve 526.

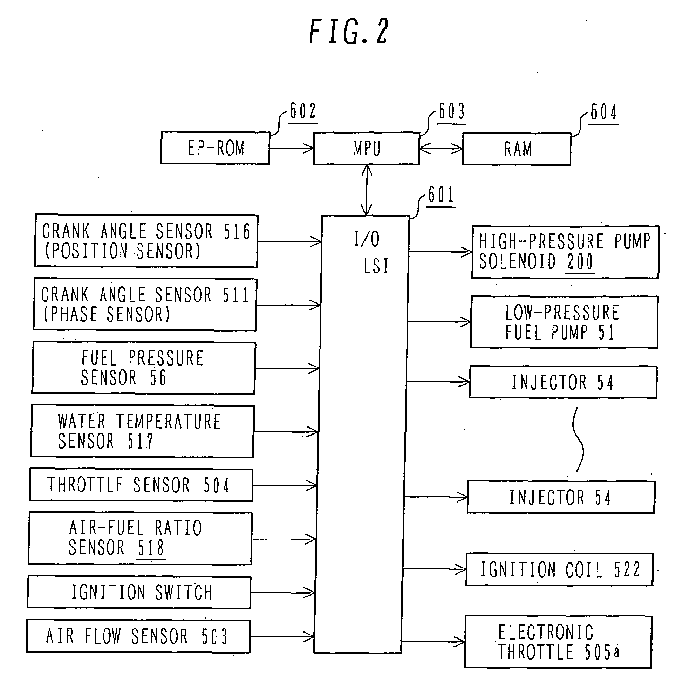

Fig. 2 is a diagram showing essential parts of the control unit 515. The control unit 515, which is composed of an MPU 603, an EP-ROM 602, a RAM 604, and an I/OLSI 601 including an A/D converter, receives as inputs signals from sensors such as the position sensor 516, the phase sensor 511, a water temperature sensor 517, an accelerator sensor (not shown), an air-fuel ratio sensor 518, the air flow sensor 503, a fuel pressure sensor 56, an ignition switch (not shown), etc. Then, the control unit performs predetermined calculation processing and then supplies various control signals produced as a result of the calculation to a high-pressure pump solenoid 200 (actuator), the low-pressure fuel pump 51, each injector 54, the ignition coil 522, the electronic throttle valve 505a, etc. to control the fuel discharge quantity, the fuel injection quantity, the ignition timing, etc.

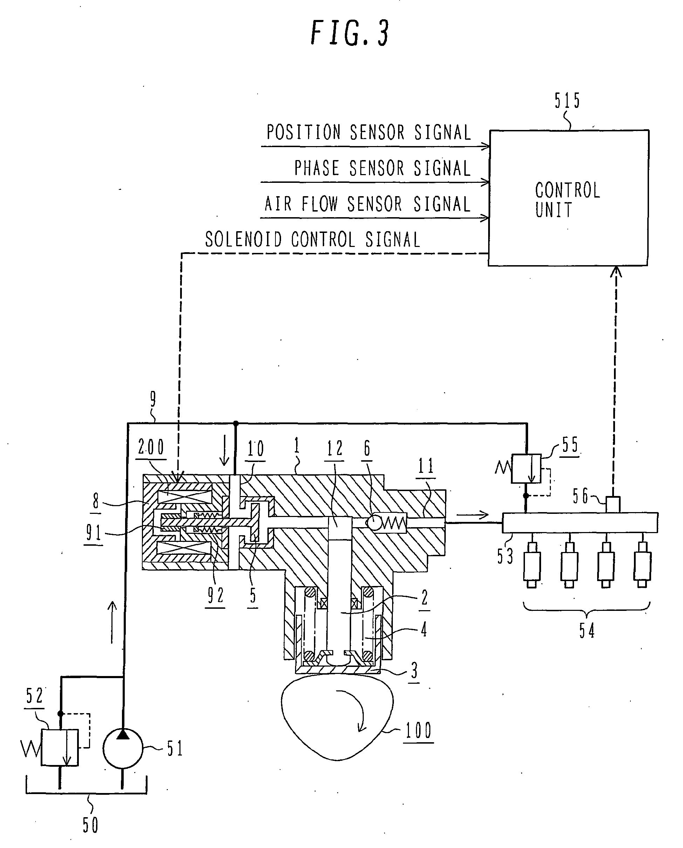

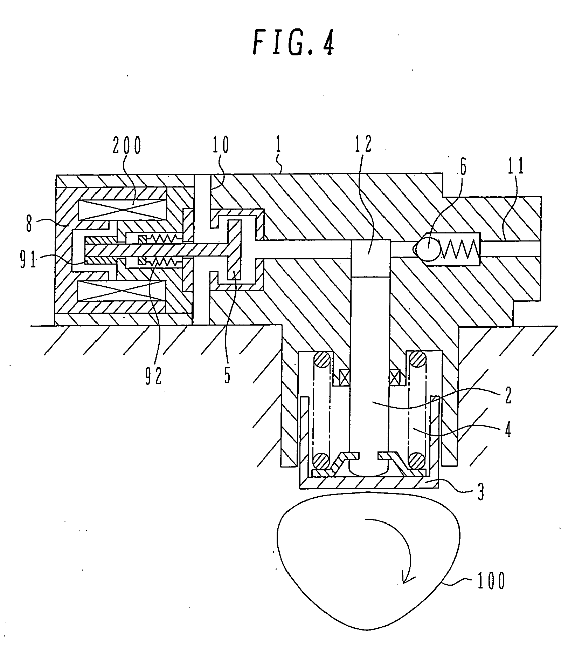

Fig. 3 is an overall block diagram of a fuel system having the high-pressure fuel pump 1. Fig. 4 is a longitudinal sectional view of the high-pressure fuel pump 1.

The high-pressure fuel pump 1 pressurizes the fuel coming from the fuel tank 50 and then transfers the high-pressure fuel to the common rail 53, wherein a fuel charging passage 10, a fuel discharging passage 11, and a pressurized fuel chamber 12 are formed. A plunger 2 which is a pressing member is slidably supported in the pressurized fuel chamber 12. The fuel discharging passage 11 is provided with a fuel discharging valve 6 in order not to allow the high-pressure fuel on the downstream side to flow back to the pressurized chamber. Further, the fuel charging passage 10 is provided with a solenoid valve 8 which controls charging of the fuel. The solenoid valve 8 is a normal-close type solenoid valve. Force acts in the valve closing direction when the power is not distributed and in the valve opening direction when the power is distributed.

The fuel coming from the fuel tank 50 is controlled to a fixed pressure by the fuel pressure regulator 52 and then led to a fuel inlet (connected to the fuel charging passage 10) of the high-pressure fuel pump 1 by the low-pressure fuel pump 51. Then, the fuel is pressurized by the high-pressure fuel pump 1 and transferred from a fuel discharge outlet through the fuel discharging passage to the common rail 53.

The common rail 53 is provided with the injectors 54 (four injectors with the present embodiment), the fuel pressure sensor 56, and a pressure regulating valve (hereinafter referred to as relief valve 55). The relief valve 55 opens when the fuel pressure in the common rail 53 exceeds a predetermined value so as to prevent high-pressure pipes from being damaged.

The injectors 54, each provided for each cylinder of the engine, inject fuel according to a drive current (control signal) given from the control unit 515. The fuel pressure sensor 56 outputs acquired pressure data to the control unit 515. The control unit 515 calculates an appropriate fuel injection quantity, fuel pressure, etc. based on engine state variables (a crank rotational angle, a throttle opening, an engine rotational speed, a fuel pressure, etc.) obtained from various sensors to control the pump 1 and the injectors 54.

The plunger 2 reciprocates through a lifter 3 pressed to the pump drive cam 100 rotating with the rotation of the cam shaft of the exhaust valve 526 in the engine 507 to change the inner volume of the pressurized fuel chamber 12. When the plunger 2 moves downward and the volume of the pressurized chamber 12 increases, the solenoid valve 8 opens, and the fuel flows from the fuel charging passage 10 into the pressurized chamber 12. Hereinafter, the stroke in which the plunger 2 moves downward is referred to as charging stroke. When the plunger 2 moves upward and the solenoid valve 8 closes, the fuel in the pressurized chamber 12 is pressurized, pushes to open the fuel discharging valve 6, and is transferred to the common rail 53. The fuel discharging valve 6 is a check valve having a structure which prevents fuel flowing from the common rail 53 toward the fuel discharging passage. Hereinafter, the stroke in which the plunger 2 moves upward is referred to as compression stroke.

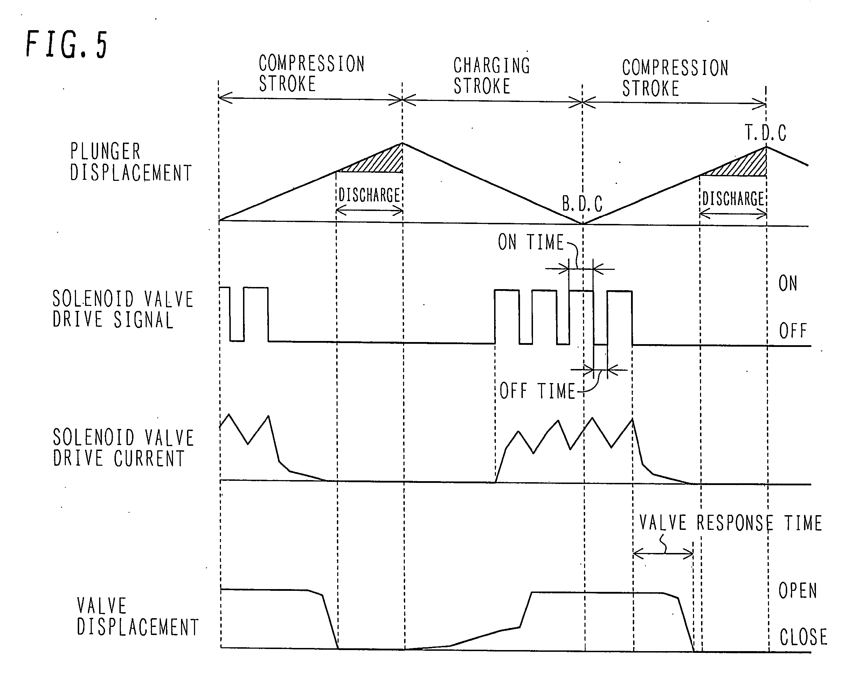

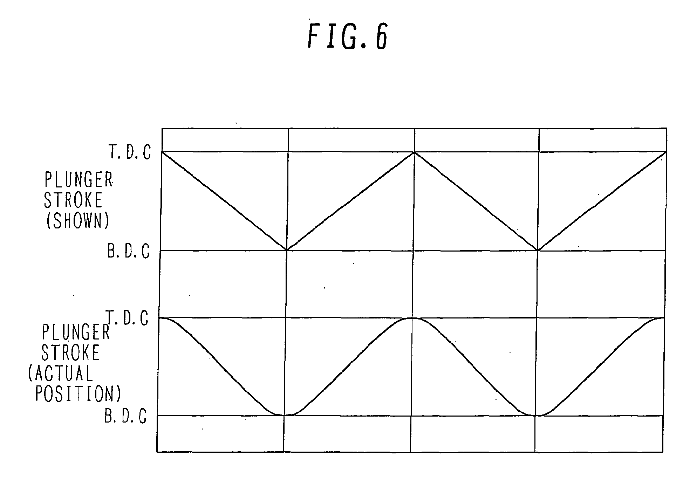

Fig. 5 is an operation timing chart of the high-pressure fuel pump 1. Although the actual stroke (actual position) of the plunger 2 driven by the pump drive cam 100 draws a curve as shown at the bottom of Fig. 6, hereinafter, the stroke of the plunger 2 is linearly drawn as shown at the top of Fig. 6 in order to clarify T.D.C. and B.D.C. positions.

If the solenoid valve 8 closes during the compression stroke, the fuel channeled into the pressurized chamber 12 during the charging stroke is pressurized and then discharged to the side of the common rail 53. Further, the pressure in the fuel charging passage 10 is lower than that in the common rail 53. Therefore, if the solenoid valve 8 opens during the compression stroke, the fuel is put back to the side of the charging passage 10 preventing the fuel in the pressurized chamber 12 from being discharged to the side of the common rail 53. Fuel discharge from the pump 1 is thus controlled by the open/close operation of the solenoid valve 8. The open/close operation of the solenoid valve 8 is controlled by the control unit 515.

The solenoid valve 8 has a valve 5, a spring 92 which biases the valve 5 in the valve closing direction, a solenoid 200, and an anchor 91 as components. When a current flows in the solenoid 200, the anchor 91 generates electromagnetic force and is pulled toward the right side of the diagram, thus opening the valve 5 integrally formed with the anchor 91. If a current does not flow in the solenoid 200, the valve 5 is closed by the spring 92 which biases the valve 5 in the valve closing direction. Since the structure of the solenoid valve 8 is such that the solenoid valve 8 closes if a drive current is not flowing, it is referred to as normal close type solenoid valve.

During the charging stroke, the pressure in the pressurized fuel chamber 12 is lower than that in the fuel charging passage 10, and the fuel in the charging passage 10 pushes to open the valve 5 by the pressure difference, thus charging the pressurized chamber 12 with the fuel. In this case, the spring 92 is provided so that the valve 5 is pulled in the valve closing direction. Since the valve 5 is designed such that the fuel pushes to open it by the pressure difference, sending a drive current to the solenoid 200 further facilitates the opening of the valve 5.

On the other hand, during the compression stroke, the pressure in the pressurized chamber 12 is higher than that in the charging passage 10, and a force in the valve closing direction is exerted on the valve 5 by the pressure difference. Here, if a drive current is not flowing in the solenoid 200, the valve 5 is closed by a spring force which biases the valve 5 in the valve closing direction. On the other hand, if a drive current flows in the solenoid 200 and sufficient magnetic attractive force is generated, the valve 5 is opened by the magnetic attractive force.

Therefore, if a drive current is sent to the solenoid 200 of the solenoid valve 8 during the charging stroke and that state is maintained during the compression stroke as well, the valve 5 is held in the closed condition. In the meantime, the fuel in the pressurized chamber 12 flows back to the fuel charging passage 10 and is not transferred to the common rail. On the other hand, if a drive current is stopped at a certain timing during the compression stroke, the valve 5 closes, and the fuel in the pressurized chamber 12 is pressurized and then discharged to the side of the discharging passage 11. If the timing at which the drive current is stopped is too early, the volume of the fuel to be pressurized increases; if the timing at which the drive current is stopped is too late, the volume of the fuel to be pressurized decreases. Therefore, the control unit 515 can control the discharging flow rate of the pump 1 by controlling the timing at which the valve 5 closes.

Further, it is possible to perform feedback control with a target value set to the pressure of the common rail 53 by calculating an appropriate power distribution OFF timing with the control unit 515 based on the signal of the fuel pressure sensor 56 to control the solenoid 200.

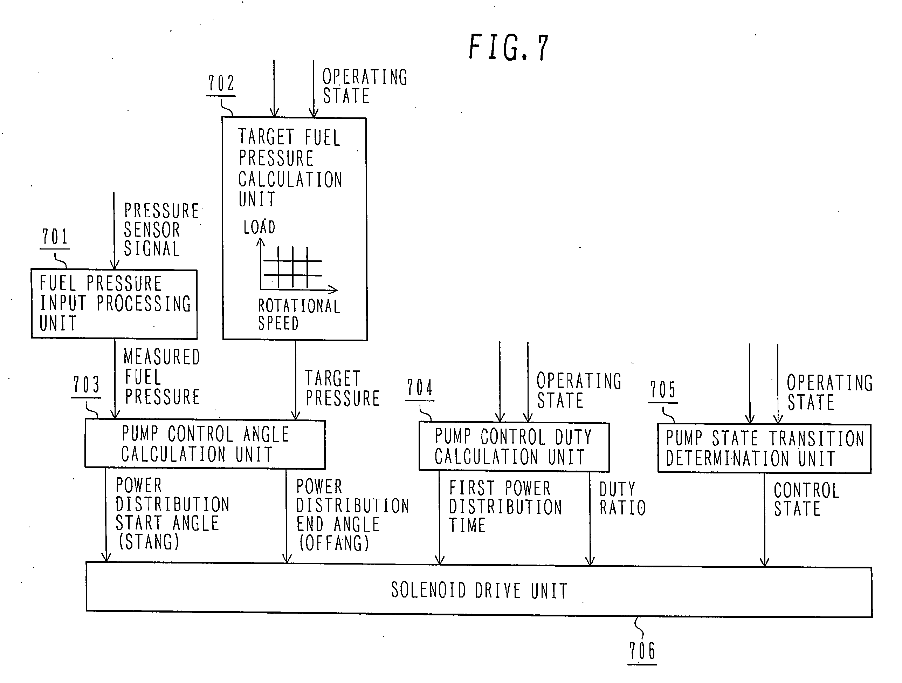

Fig. 7 is an aspect of a block diagram showing control of the high-pressure fuel pump 1 performed by the MPU 603 of the control unit 515 having a high-pressure fuel pump control device. The high-pressure fuel pump control device is composed of a fuel pressure input processing unit 701 which performs filter processing of a signal from the fuel pressure sensor 56 and outputs actual fuel pressures; a target fuel pressure calculation unit 702 which calculates an optimal target fuel pressure for an operating point from the engine rotational speed and load; a pump control angle calculation unit 703 which calculates a phase parameter for controlling the discharging flow rate of the pump from an actual fuel pressure and a target fuel pressure; a pump control duty calculation unit 704 which calculates a parameter of a duty signal which is a driving signal of the pump from the battery voltage and the engine rotational speed; a pump state transition determination unit 705 which determines a state of the direct injection engine 507 and makes the transition of the pump control mode; and a solenoid drive unit 706 which gives a current generated by a duty signal to the solenoid 200.

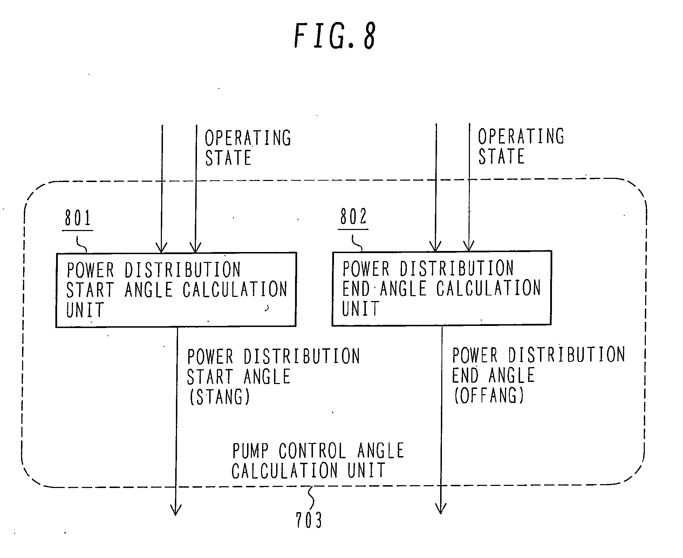

Fig. 8 shows an aspect of the pump control angle calculation unit 703. The pump control angle calculation unit 703 is composed of a power distribution start angle calculation unit 801 and a power distribution end angle calculation unit 802.

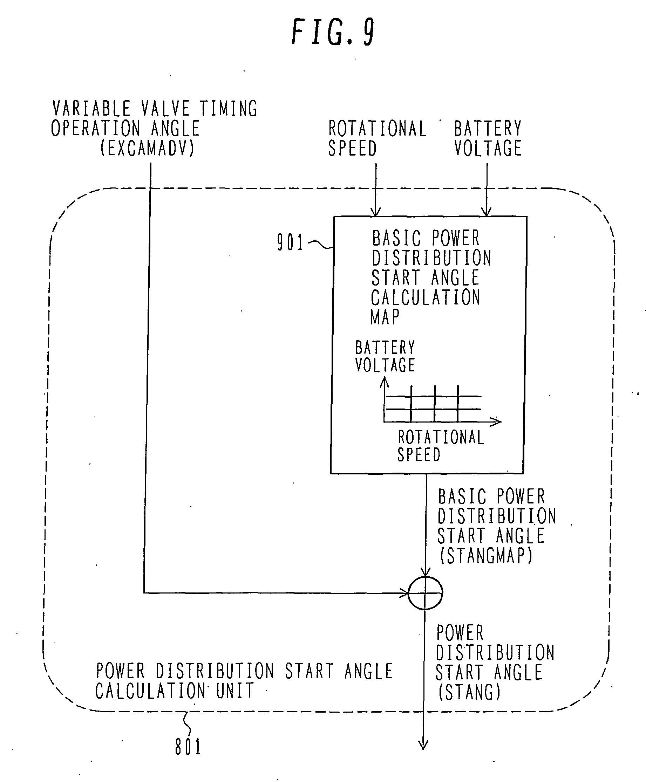

Fig. 9 shows an aspect of the power distribution start angle calculation unit 801. The power distribution start angle calculation unit 801 calculates a basic power distribution start angle STANGMAP from a basic power distribution start angle calculation map 901 having inputs of engine rotational speed and battery voltage and calculates a power distribution start angle STANG by correcting a phase difference EXCAMADV produced by a variable valve timing mechanism of a pump drive cam shaft.

For correction of the phase difference by the variable valve timing mechanism, if the variable valve timing mechanism operates toward the advanced angle side in relation to a zero operating angle position, subtraction is performed; if the variable valve timing mechanism operates toward the retard angle side, addition is performed. The present embodiment is premised on a variable valve timing mechanism that operates toward the retard angle side. With pump control phase parameters, the same concept hereinafter applies to the portions that require phase difference correction by the variable valve timing mechanism.

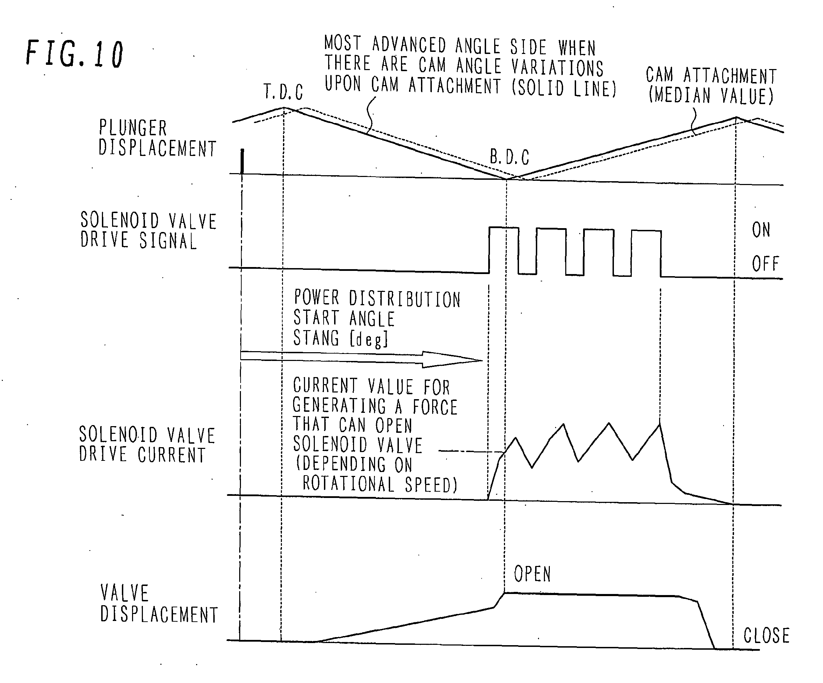

Fig. 10 shows a method of setting a basic power distribution start angle STANGMAP. A basic power distribution start angle STANGMAP equals a power distribution start angle STANG when a phase difference by the variable valve timing mechanism is zero. Since the pump is a normal close type, unless a sufficient force that can open the solenoid valve 8 starts to work by the time the pump plunger reaches the B.D.C., the solenoid valve 8 closes resulting in full discharge.

If the timing at which the fuel in the pressurized fuel chamber 12 is pressurized by the plunger 2 is earlier than the timing at which the valve is opened, the force for closing the valve by the pressure difference between the pressurized fuel chamber 12 and the fuel charging passage 10 becomes larger than the force for opening the valve by the drive current (particularly when gasoline is used as fuel, the pressure in the pressurized fuel chamber 12 immediately rises by the upward movement of the plunger 2), thus making it impossible to open the valve. This is because the force for opening the valve by the drive current cannot be increased so much. Under such a situation, regardless of the fuel discharge quantity calculated in the control unit 515, all the fuel channeled into the pressurized fuel chamber by the upward movement of the plunger 2 pushes to open the discharging valve and then flows into the common rail 53.

Therefore, unless the power distribution start angle is accurately controlled according to the operating condition of the internal combustion engine, an unexpected pressure rise occurs resulting in degraded combustion condition and accordingly degraded emission gas performance. For this reason, the present inventor takes notice of means for improving the control accuracy of the power distribution start angle. Further, if the power distribution start angle is not made variable and power distribution is started uniformly from the time point of the T.D.C. of the pump plunger, a duration time to generate a force that opens the solenoid valve becomes longer than necessary, resulting in increased power consumption of the pump solenoid and increased heat release values.

The force that can open the valve increases in proportion to the rotational speed. Before a pressure rise in the pressurized fuel chamber 12 by the plunger 2, that force is slightly larger than the force exerted in the valve closing direction. Therefore, since the force generated in the solenoid is proportional to the current, it is necessary that a current equal to or larger than a certain fixed value flows in the solenoid 200 before the B.D.C. of the pump is reached. Since the time required to reach the fixed value depends on the voltage of the battery which is the power supply of the solenoid 200 and the fixed value depends on the rotational speed, the engine rotational speed and the battery voltage are input to the basic power distribution start angle calculation map 901.

Further, in terms of operating characteristics of the above-mentioned pump, it is necessary that the time required for the current flowing in the solenoid 200 to reach the fixed value be within the period of the charging stroke. Therefore, a range of power distribution start angle, i.e., a range of angle within which ON signal output is requested is basically sent within the charging stroke of the pump.

Further, there are phase variations when the pump drive cam is attached. Therefore, by setting such that a current equal to or larger than a predetermined value flows in the solenoid 200 before the B.D.C. of the pump is reached even if the pump has phase variations on the most advanced angle side, the pump can avoid an unexpected pressure rise even if there are phase variations upon cam attachment. As a setting method of taking variations into consideration, the basic power distribution start angle STANGMAP may be set so as to include variations.

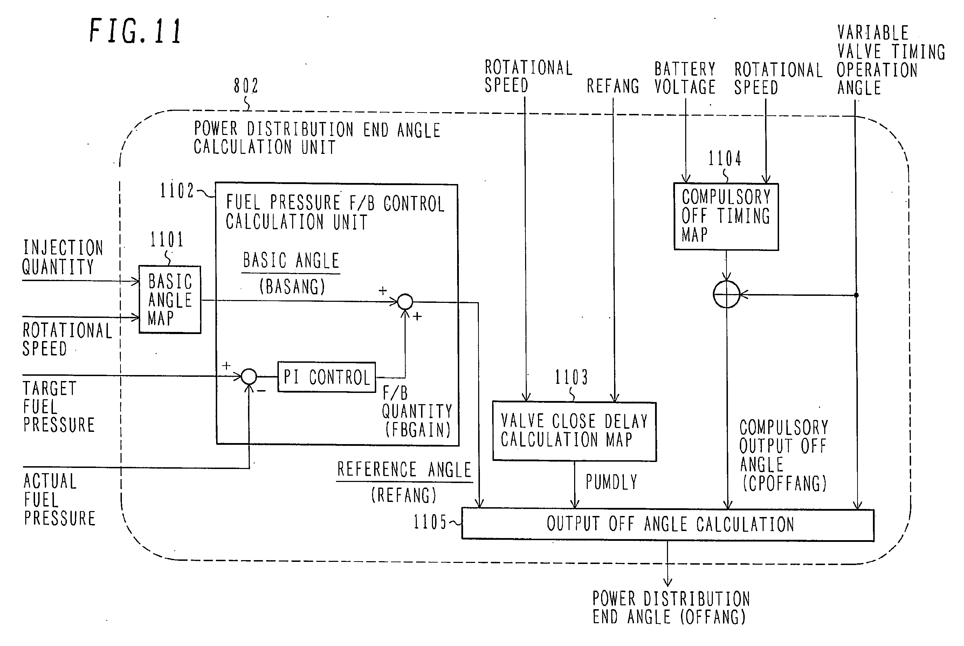

Fig. 11 shows an aspect of the power distribution end angle calculation unit 802. With the pump, the discharge quantity is controlled by changing the power distribution end angle. A basic angle BASANG is calculated from a basic angle map 1101 having inputs of injection quantity of injectors and engine rotational speed. For BASANG, a requested discharge quantity in the steady operating condition is set to a closing valve angle corresponding to the discharge.

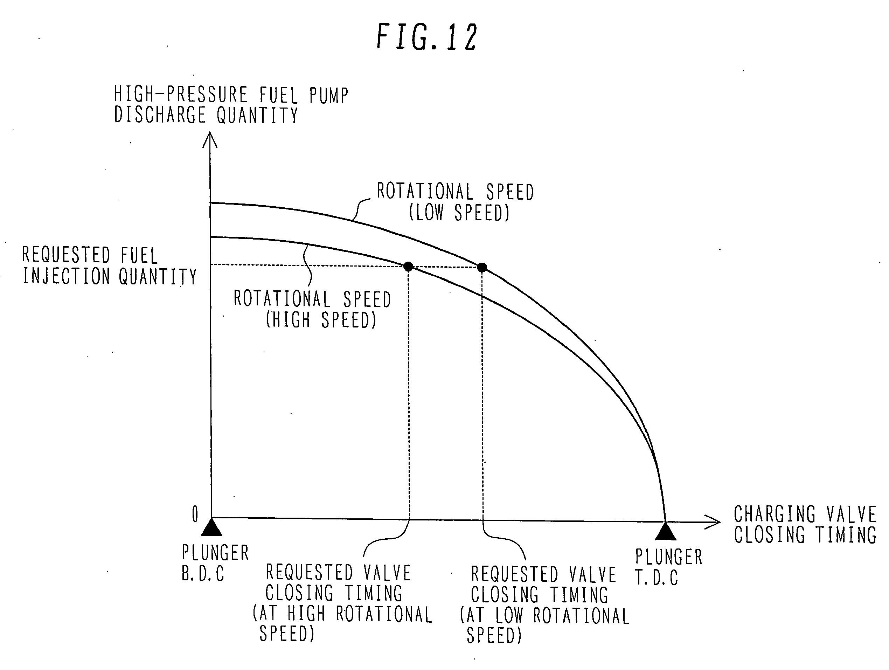

Fig. 12 shows a method of setting the basic angle BASANG. Fig. 12 is a diagram showing a relation between the discharge quantity of the high-pressure fuel pump and the valve closing timing. With the pump, the discharge quantity decreases as the solenoid valve closing timing approaches the T.D.C. of the plunger. Further, since discharging efficiency differs according to the engine rotational speed, the discharge quantity of the high-pressure fuel pump changes; accordingly, the basic angle BASANG changes with the rotational speed. Therefore, it becomes possible to improve control response by calculating the basic angle BASANG from the basic angle map having inputs of the injection quantity of injectors and engine rotational speed.

A fuel pressure F/B control and calculation unit 1102 calculates a reference angle REFANG by adding an F/B fuel pressure calculated from a target fuel pressure and an actual fuel pressure to the basic angle BASANG. The reference angle REFANG denotes an angle from a standard REF at which the solenoid valve 8 is to be closed on the assumption that variable valve timing operation is not performed. Here, a standard REF denotes a position of a reference point for phase control. With the control unit 515, it is necessary to set a reference point in order to output data for a requested phase.

The power distribution end angle OFFANG is calculated through addition/subtraction of a valve closing delay PUMDLY calculated from a valve closing delay calculation map 1103 having inputs of REFANG and engine rotational speed and a variable valve timing operation angle to/from the reference angle REFANG. Here, REFANG and the engine rotational speed are used for valve closing delay PUMDLY because a fluid force generated in the pump differs according to the valve closing timing and the rotational speed.

Further, OFFANG has an upper-limit value which is a compulsory output off angle CPOFFANG. CPOFFANG is a value obtained by adding a variable valve timing operation angle to a value outputted from a compulsory off timing map having inputs of engine rotational speed and battery voltage.

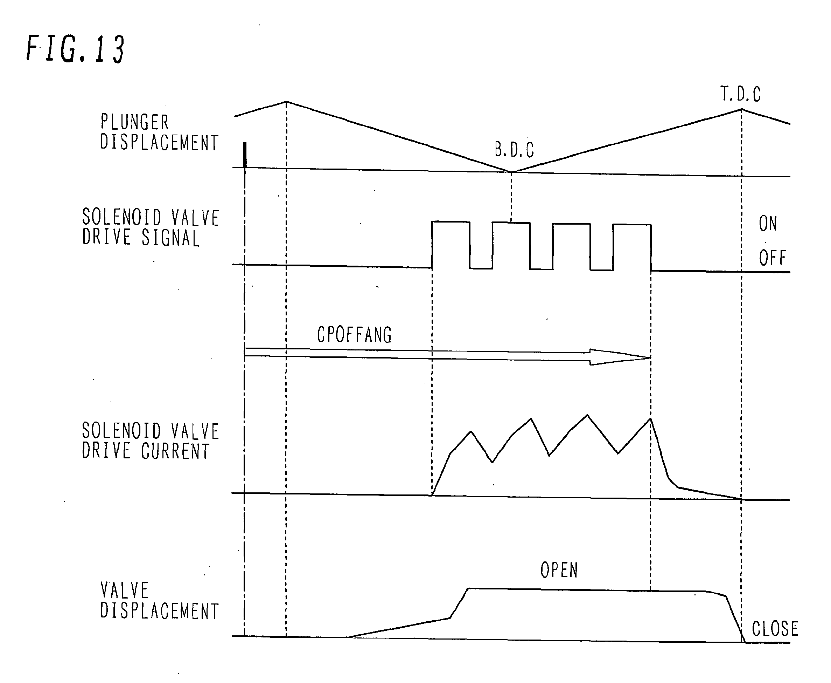

Fig. 13 shows a method of setting a compulsory output off angle CPOFFANG. An object of CPOFFANG is to stop power distribution in an angle region wherein fuel is not discharged even if power distribution is stopped so as to reduce the power consumption and prevent heat generation from the solenoid 200. Therefore, it is necessary to accurately control the compulsory output off angle CPOFFANG according to operating conditions. As shown in Fig. 13, since there is a valve closing delay even if the driving signal is stopped before the T.D.C., the valve continues to be opened until the T.D.C. is almost reached; afterward, the pump performs non-discharge operation.

The compulsory output off angle CPOFFANG is used also in the fuel-cut condition under which non-discharge operation is required, and power distribution to the solenoid is ended at this angle. Total power distribution control of the solenoid 200 reduces the power consumption further than would be achieved by making the non-discharge operation condition, preventing heat generation from the solenoid 200 as well.

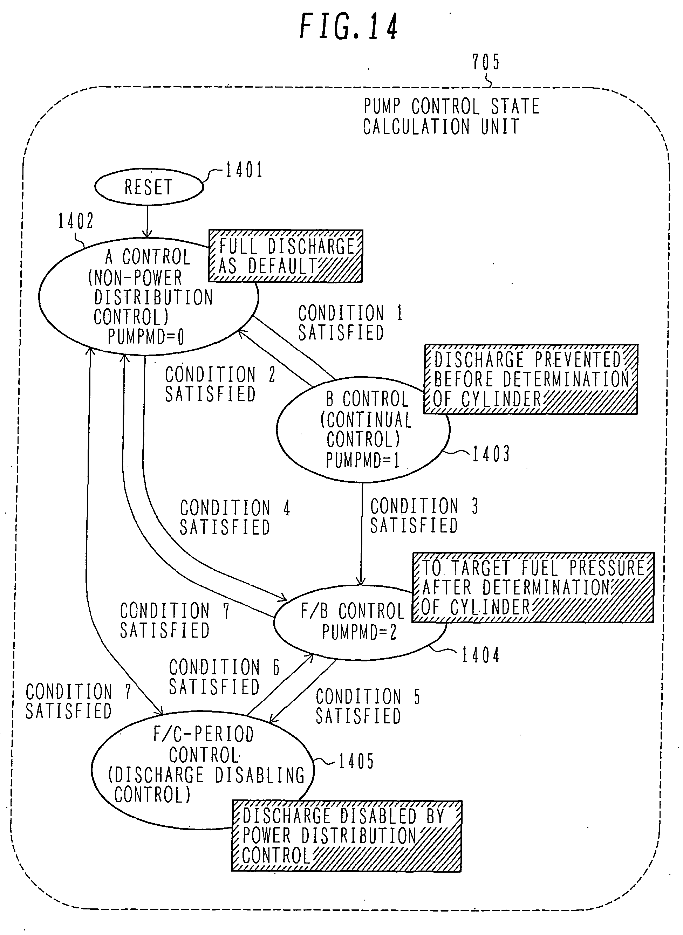

Fig. 14 is a state transition diagram showing an aspect of the pump state transition determination unit 705. The control block is composed of A-control, B-control, feedback control (hereinafter referred to as F/B control), and fuel-cut interval control (hereinafter referred to as F/C-period control).

A-control is default control, wherein if the engine is rotating at the start of operation, the pump performs full discharge. B-control aims at preventing a pressure rise before REF signal recognition in the case of high residual pressure in the common rail. F/B control aims at performing control to attain a target fuel pressure, and F/C-period control stops fuel transfer aiming at preventing a pressure rise of the fuel pressure in the common rail during F/C.

First, when the ignition switch is turned ON from OFF and the MPU 603 of the control unit 515 is reset, the non-power-distribution-control state (A-control block 1402) is entered wherein a pump state variable PUMPMD is zeroed, and power distribution to the solenoid 200 is not performed.

Then, when the starter switch is turned ON, the engine 507 enters a cranking state to detect a crank angle signal CRANK. If the fuel pressure in the common rail 53 is high, condition 1 is satisfied; accordingly, pump control makes a transition to the regular interval power distribution control state (B-control block 1403) wherein the pump state variable PUMPMD is set to 1. In the B-control block 1403, although the pulse of the crank angle signal CRANK is detected, the stroke of the plunger 2 (REF signal) is not recognized. In this state, a plunger phase between the crank angle signal CRANK and a cam angle signal CAM has not yet been determined, i.e., it is not possible to recognize a timing at which the plunger 2 of the high-pressure fuel pump 1 reaches the B.D.C. position.

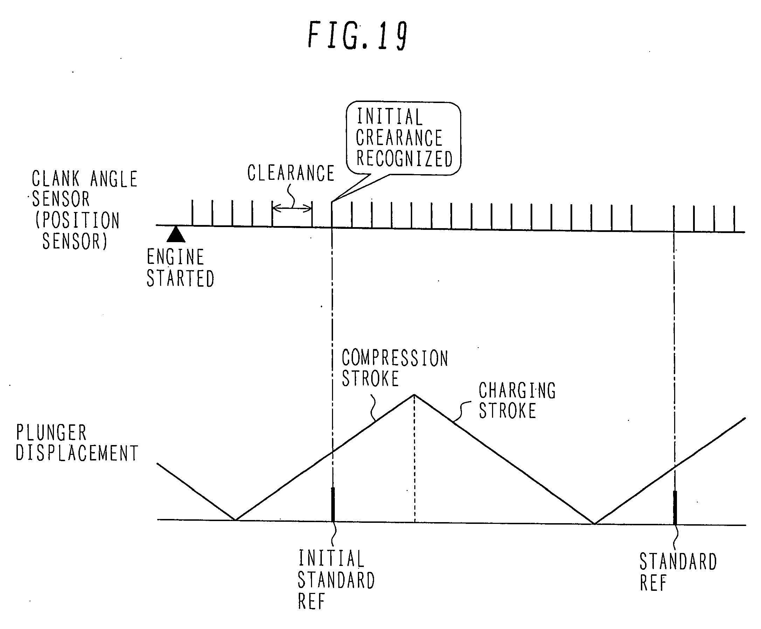

Then, when the cranking state shifts from an early stage to a middle stage wherein the plunger phase between the crank angle signal CRANK and the cam angle signal CAM is determined and an operating condition that can generate a standard REF is entered, condition 3 is satisfied. Accordingly, pump control makes a transition to the F/B control block 1404 wherein the pump state variable PUMPMD is set to 2, and a solenoid control signal is outputted so that an actual fuel pressure calculated by the fuel pressure input processing unit 701 agrees with a target fuel pressure calculated by the target fuel pressure calculation unit 702. Fig. 19 shows an examplery method of generating a standard REF. A crank angle sensor signal contains a clearance portion (a portion having a longer interval than the normal interval of the crank angle sensor signal). A crank angle sensor value when a clearance is recognized for the first time since the start of engine is set as a standard REF; subsequently, a standard REF is generated from the crank angle sensor value at fixed angle intervals. A clearance is recognized from the input interval of crank angle sensor values.

If a plunger phase is not determined and a REF signal cannot be generated during B-control, conditions 2 is satisfied; accordingly, pump control makes a transition to A-control.

Further, when the starter switch is turned ON and the engine 507 enters the cranking state, and also if the fuel pressure in the common rail 53 is low, pressure rise is promoted by performing A-control. When a pump standard REF has been generated and the target fuel pressure and the fuel pressure in the common rail are being converged, condition 4 is satisfied; accordingly, pump control makes a transition to the F/B control block 1404. This is so for the following reason: even when a pump standard REF has been generated, if the fuel pressure in the common rail is remarkably lower than the target fuel pressure, the pump performs full discharge by continuing A-control, making it possible to promote pressure rise.

The F/B control block 1404 continues unless an engine stall occurs. However, if a fuel-cut condition by deceleration of the vehicle, etc. arises in the F/B control block 1404, fuel injection by the injector 54 is not performed; therefore, the amount of fuel in the common rail 53 does not decrease. In that case, condition 5 is satisfied; accordingly, pump control makes a transition to the F/C-period control block 1405 wherein the pump state variable PUMPMD is set to 3, and fuel transfer from the high-pressure fuel pump 1 to the common rail 53 is stopped. When condition 6 is satisfied at the end of the fuel-cut condition, pump control makes a transition from the F/C-period control block 1405 to the F/B control block 1404, and normal feedback control is restored.

If the control unit 515 recognizes an engine stall during F/B control or F/C-period control, condition 7 is satisfied; accordingly, pump control makes a transition to the A-control block 1402.

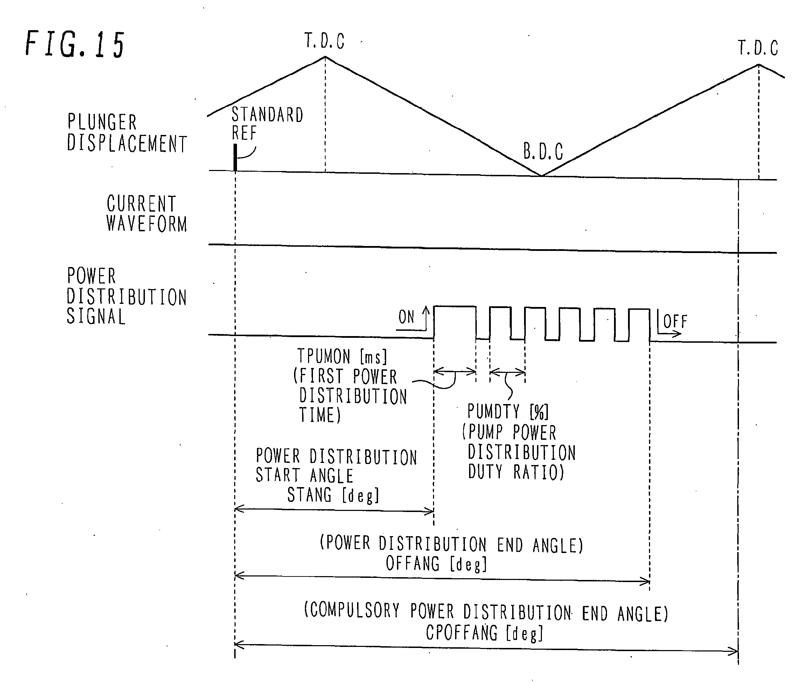

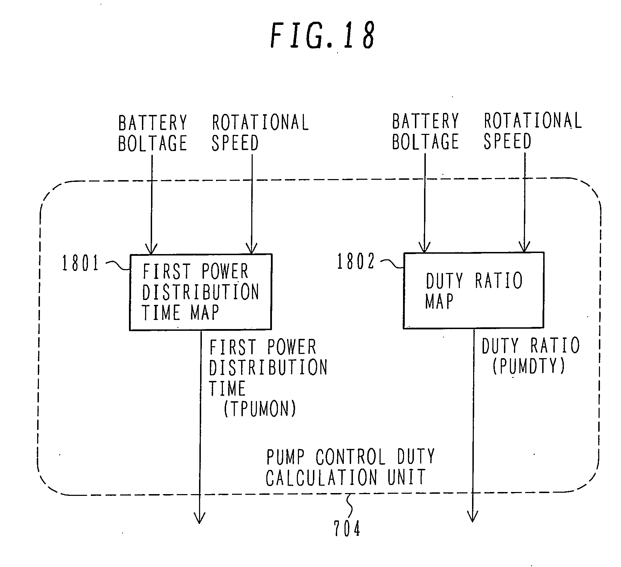

Fig. 15 shows a time chart of a power distribution signal to the solenoid 200 during F/B control. An open current control duty is outputted during the period from the end of the power distribution start angle STANG to that of the power distribution end angle OFFANG. The open current control duty is composed of a first power distribution time TPUMON and a duty ratio after the first power distribution. Here, the first power distribution time TPUMON and the duty ratio PUMDTY after the first power distribution are calculated in the pump control duty calculation unit 704. Fig. 18 shows an exemplary calculation performed in the pump control duty calculation unit 704. The first power distribution time TPUMON is calculated by a first power distribution time map (block 1801) having inputs of battery voltage and engine rotational speed.

Further, the duty ratio PUMDTY is calculated by a duty ratio map (block 1802) having inputs of engine rotational speed and battery voltage.

The first power distribution time TPUMON and the duty ratio PUMDTY are calculated from the rotational speed and the battery voltage which are parameters showing operating conditions. Therefore, since the operating condition needs to be grasped accurately in order to improve the control accuracy, it is preferable to use a latest value that can be set at any given time.

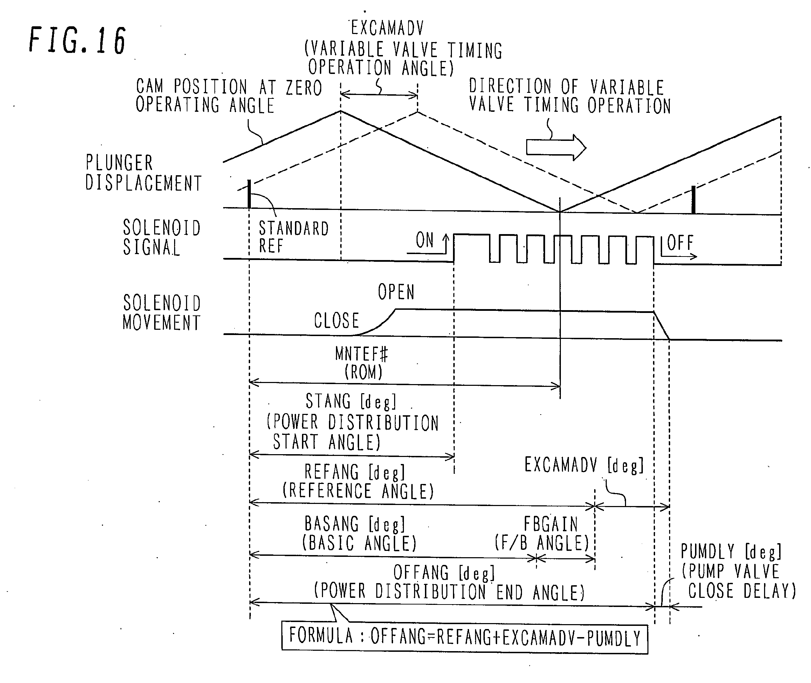

Fig. 16 shows each parameter used for the power distribution start angle STANG and the power distribution end angle OFFANG of a solenoid control signal for fuel pressure control by the control unit 515.

The power distribution start angle STANG and the power distribution end angle OFFANG of the solenoid signal are set from a standard REF generated based on the CRANK signal and the CAM signal and the stroke of the plunger 2. First, the power distribution start angle STANG is calculated by adding a corrected phase difference by the variable valve timing mechanism of the pump drive cam shaft to the value from the basic power distribution start angle calculation map having inputs of engine rotational speed and battery voltage, as shown in Fig. 9.

Further, the power distribution end angle OFFANG can be calculated by the following Formula 1.

$$\mathtt{OFFANG=REFANG+EXCAMADV-PUMDLY} \quad .... \quad (\mathtt{Formula\ 1})$$

where REFANG is a reference angle that can be calculate by the following Formula 2.

$$\mathtt{REFANG=BASANG+FBGAIN} \quad .... \quad (\mathtt{Formula\ 2})$$

where BASANG is a basic angle which is calculated by the basic angle map 1101 (Fig. 11) based on the operating condition of the engine 507, EXCAMADV is a cam actuation angle that is equivalent to the operating angle of the variable valve timing, and PUMDLY is a retard angle of the pump and FBGAIN is an amount of gain fed back.

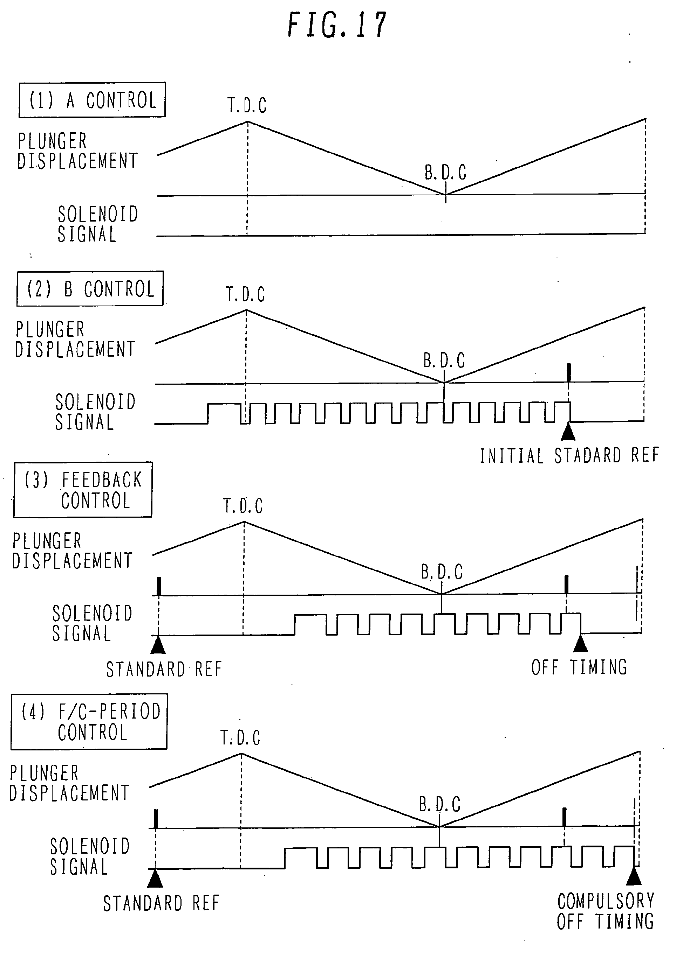

Fig. 17 shows a power distribution signal to the solenoid 200 in each control state. During A-control, the power is not distributed in the solenoid 200. During B-control, an open current control duty is outputted since B-control is permitted until a first standard REF occurs. During F/B control, an open current control duty is outputted during the period from the end of the power distribution start angle STANG to that of the power distribution end angle OFFANG. During F/C-period control, an open current control duty is outputted during the period from the end of the power distribution start angle STANG to that of a compulsive power distribution end angle CPOFFANG.

As mentioned in the explanation for Fig. 10, it is important to control the power distribution start angle accurately. In order to improve the control accuracy of the power distribution start angle, the following measures are required:

(1) Improvement of the calculation accuracy of the power distribution start angle STANG

(2) Decrease in an error between the power distribution start angle STANG calculated as a request value and the actual output start angle

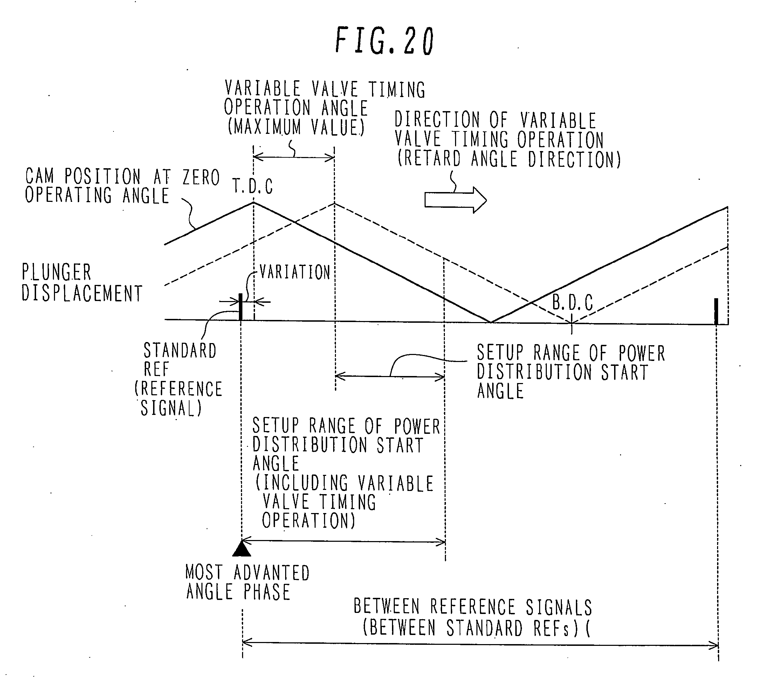

Fig. 20 shows a first embodiment that applies the above-mentioned measure (1). Fig. 20 shows a relation between a standard REF and a plunger displacement. The calculation accuracy is improved by arranging a standard REF on the crank angle signal immediately before the setup range of the power distribution start angle (most advanced angle phase). The reason is as follows: since the request value of the power distribution start angle is determined based on the operating condition of a particular time at the time of the standard REF, if the standard REF is separated from the setup range of the power distribution start angle, the operating condition may change (the request value may change) by the start of power distribution due to the increased susceptibility of the calculation accuracy to the change of the operating condition. A standard REF is arranged on the crank angle signal so as to use the same phase as a reference at any time without being affected by fluctuations of the rotational speed, etc. Further, when the cam angle sensor output is arranged at the T.D.C. of the pump drive cam, it becomes possible to maintain the control accuracy of the power distribution start angle by using the cam angle sensor output even if the crank angle sensor fails.

In accordance with the present embodiment, the system performance is improved by handling the power distribution start position as an important parameter. For this purpose, it is found necessary to arrange a standard REF in the compression stroke of the pump.

The setup range of the power distribution start angle is a sum of a range requested from pump operating characteristics, a maximum operating angle of the variable valve timing, and phase variations upon sensor and cam attachment.

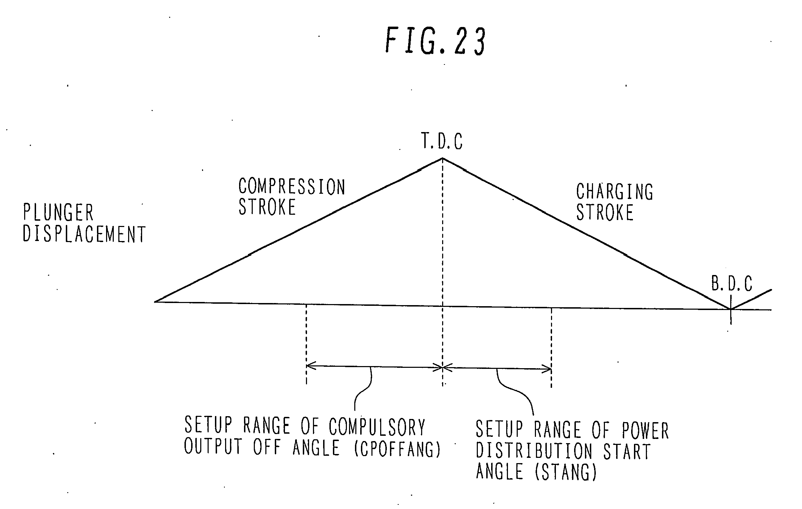

Fig. 23 shows a setup range of the power distribution start angle and a setup range of the compulsory output off angle which are requested from the pump operating characteristics. The setup range of the power distribution start angle basically equals a range determined according to the operating condition after the plunger T.D.C. in terms of the pump operating characteristics. On the other hand, the setup range of the compulsory output off angle equals a range determined according to the operating condition before the plunger T.D.C. in terms of pump operating characteristics.

Further, it is preferable that a phase range for a power distribution start request be between standard REFs in order to improve the accuracy. If a standard REF exists in a phase range for a power distribution start request, a value determined with a previous standard REF must be used for a range of the advanced angle side from the standard REF resulting in degraded control accuracy. Further, at the time of standard REFs, control for switching between a request value from a previous standard REF and a request value from the present standard REF is required, which increases the calculation load of the control unit resulting in degraded control accuracy.

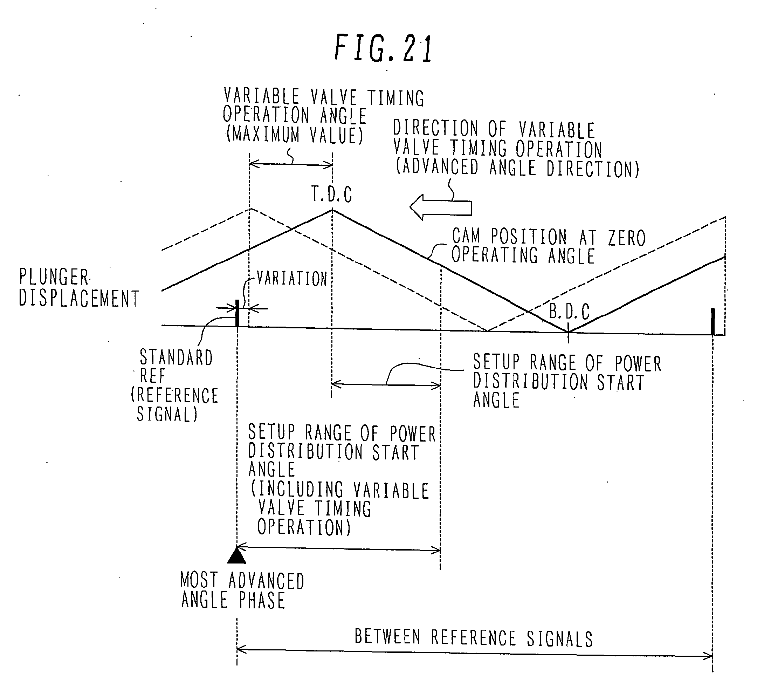

Fig. 21 is a diagram showing a case where a cam in which a timing-varied valve moves to the advanced angle side and a pump drive cam are the same system. Also in this case, the setup range of the power distribution start angle equals a sum of a range requested from the pump characteristics, a variable valve timing maximum operating angle, and phase variations upon sensor and cam attachment. For the above-mentioned reason, it is preferable to arrange a standard REF on the crank angle signal immediately before the setup range of the power distribution start angle (most advanced angle phase) and that the standard REF is within the compression stroke.

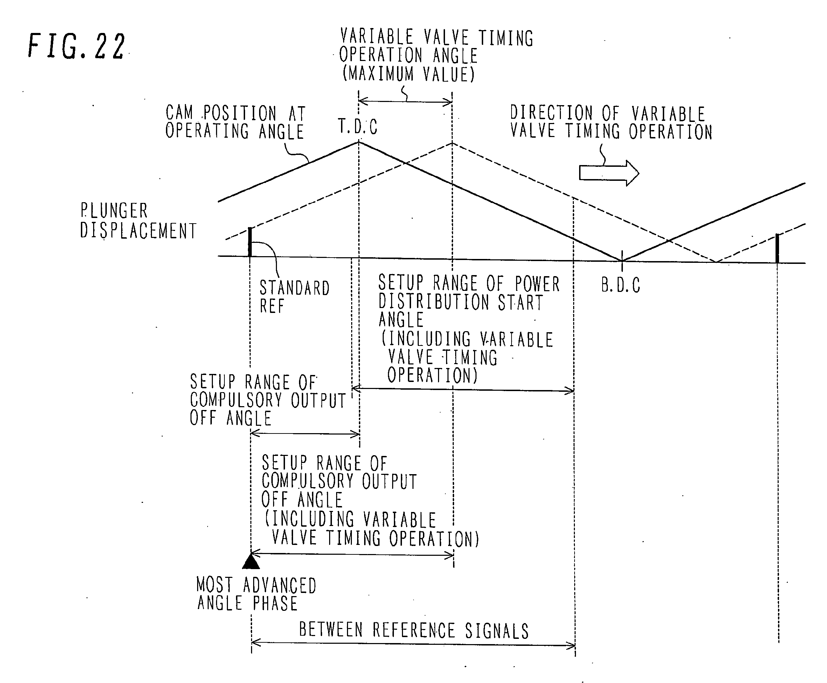

Likewise, it is necessary to improve the calculation accuracy also for the compulsory output off angle, as described in the explanation of Fig. 13. Fig. 22 shows an embodiment of means for improving the calculation accuracy of the compulsory output off angle. Fig. 22 shows a relation between a standard REF and a plunger displacement. The calculation accuracy is improved by arranging a standard REF immediately before the setup range of the compulsory output off angle (most advanced angle phase). The reason is as follows: since the request value of the compulsory output off angle is determined based on the operating condition at the time of the standard REF, if the standard REF is separated from the setup range of the compulsory output off angle, the operating condition may change (the request value may change) by the time of compulsory output off due to the increased susceptibility of the calculation accuracy to change of the operating condition.

The setup range of the compulsory output off angle is a sum of a range requested from the pump operating characteristics and a range of the variable valve timing maximum operating angle. Further, it may also be possible to take into consideration phase variations upon sensor and cam attachment.

Further, as shown in Fig. 22, by arranging a standard REF immediately before the setup range of the compulsory output off angle (most advanced angle phase) and using the same signal for the standard REF of the power distribution start angle and the power distribution end angle, it becomes possible to arrange in the vicinity of the standard REF the setup range of the power distribution start angle and the setup range of the compulsory output off angle which need accuracy. The use of the same signal simplifies the pump control method, thus enabling reduction of the calculation load.

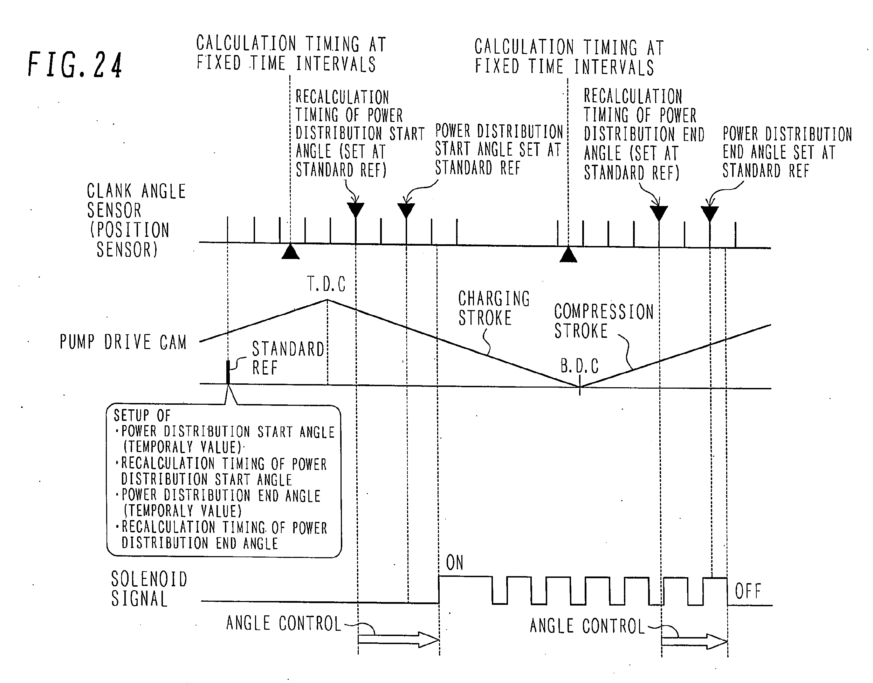

Fig. 24 shows a second embodiment that applies the above-mentioned measure (1), which is a time chart showing a method of calculating the power distribution start angle. At the time of standard REF, a power distribution start angle (temporary value) and a power distribution start angle recalculation timing are set. Here, the power distribution start angle (temporary value) refers to a power distribution start angle calculated at fixed time intervals (for example, at 10-millisecond intervals) before the standard REF. The power distribution start angle recalculation timing is calculated from the power distribution start angle (temporary value). An object of setting power distribution start angle recalculation timing is to recognize the operating condition immediately before power distribution start timing. Therefore, the power distribution start angle recalculation timing is set before the power distribution start angle (temporary value). The interval between the power distribution start angle (temporary value) and the power distribution start angle recalculation timing is set so as to be equal to or longer than a time period taken to complete recalculation by the time of the power distribution start angle (temporary value). It may also be possible to use the crank angle signal instead of time.

Then, at the power distribution start angle recalculation timing, the power distribution start angle is calculated and set again. This calculation makes it possible to reflect the power distribution start angle calculated at fixed time intervals (for example, at 10-millisecond intervals) after the standard REF, thus enabling improvement of the calculation accuracy of the power distribution start angle.

By performing similar control also for power distribution end angle calculation, it becomes possible to improve the calculation accuracy of the power distribution end angle.

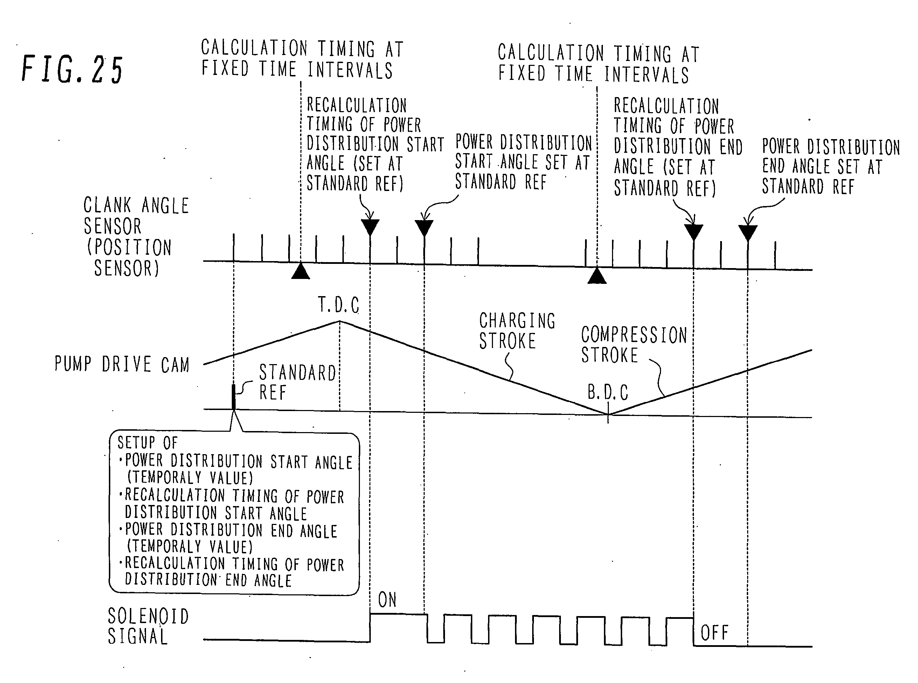

Fig. 25 is a time chart of a case where the power distribution start angle recalculated at the power distribution start angle recalculation timing is a request value before the power distribution start angle recalculation timing and a case where the power distribution end angle recalculated at the power distribution end angle recalculation timing is a request value before the power distribution end angle recalculation timing. If the power distribution start angle recalculated at the power distribution start angle recalculation timing is a request value before the power distribution start angle recalculation timing, power distribution is immediately started. If the power distribution end angle recalculated at the power distribution end angle recalculation timing is a request value before the power distribution end angle recalculation timing, power distribution is immediately ended.

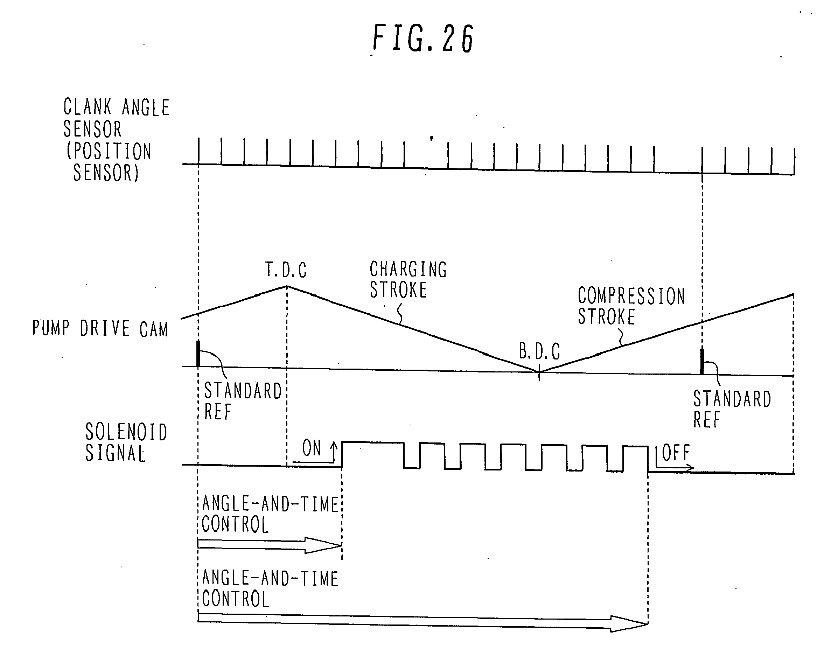

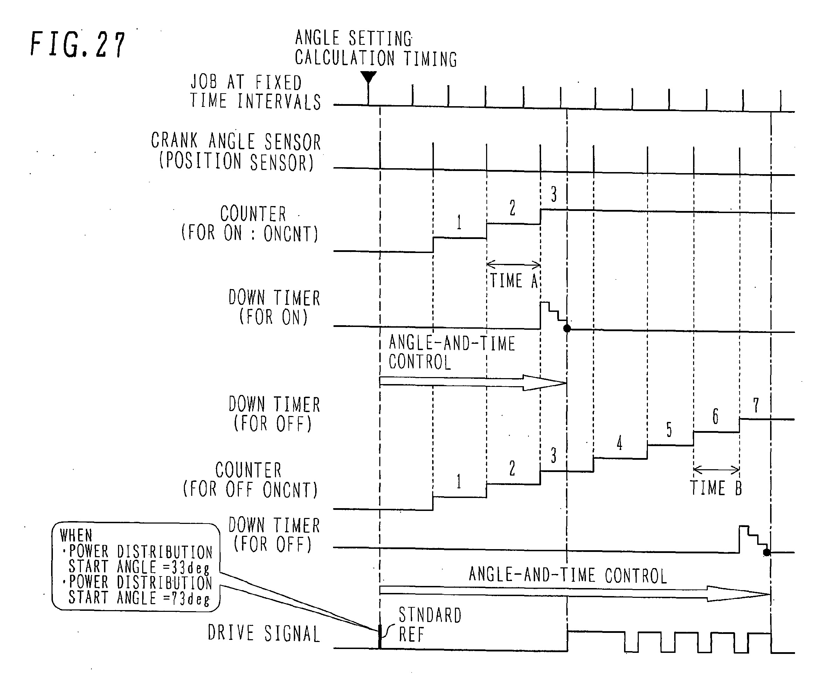

Fig. 26 shows an embodiment that applies the above-mentioned measure (2). In order to minimize an error between a power distribution start angle STANG calculated as a request value and an actual output start angle, angle-and-time control is performed. Fig. 27 is a diagram showing the angle-and-time control. In the angle-and-time control, a control angle is set based on a crank signal (for example, 10 degrees) outputted from the crank angle sensor at intervals of a predetermined crank angle. Fig. 27 shows a control method when a power distribution start angle, STANG=33 deg., is requested at the time of standard REF. When a counter ONCNT which is incremented for each crank signal becomes 3 (when the distance from the standard REF becomes 30 degrees), a time period for 3 degrees from Time A (when ONCNT is equal to 2) is set for the remaining 3 degrees. With the present embodiment, therefore, the following formula results:

$$\text{Time period for 3 deg.} = \text{Time A} \times 0.3 \ldots \text{(Formula 3)}$$

The above-mentioned setup method by use of the counter which is incremented for each crank signal is referred to as angle control, and the method of setting a time period for 3 degrees is referred to as time control. In comparison with the time control, the angle-and-time control has higher control accuracy at the time of a sudden change in the rotational speed.

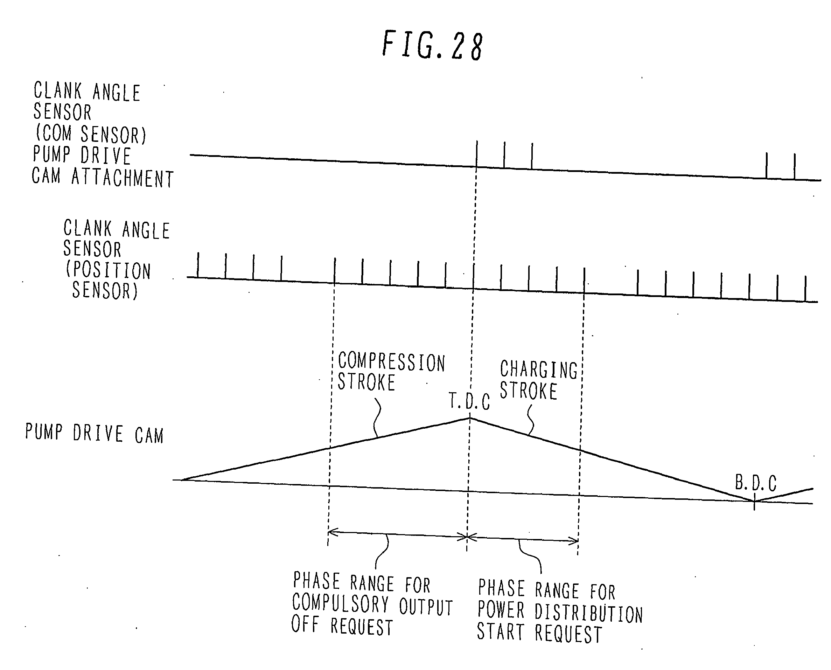

Since the high-pressure fuel pump 1 having a normal close type charging valve also requires control accuracy of the power distribution end angle, the angle-and-time control is performed for power distribution end control as well. That is, the angle-and-time control is performed for the power distribution start and power distribution end of the high-pressure fuel pump. Further, in control of the high-pressure fuel pump, the power distribution start angle and the compulsory output off angle are essential. Therefore, a crank angle sensor signal and a pump drive cam phase are arranged so that no clearance exists in the setup range of the power distribution start angle and the setup range of the compulsory output off angle, as shown in Fig. 28. This arrangement is made because, in a clearance, there is no crank angle signal, and a period of time control is thus prolonged, resulting in degraded control accuracy.

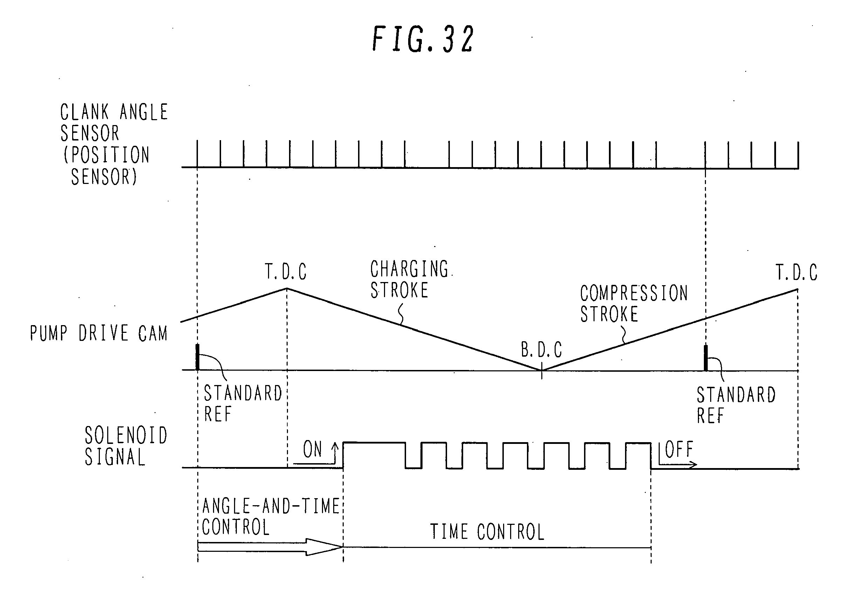

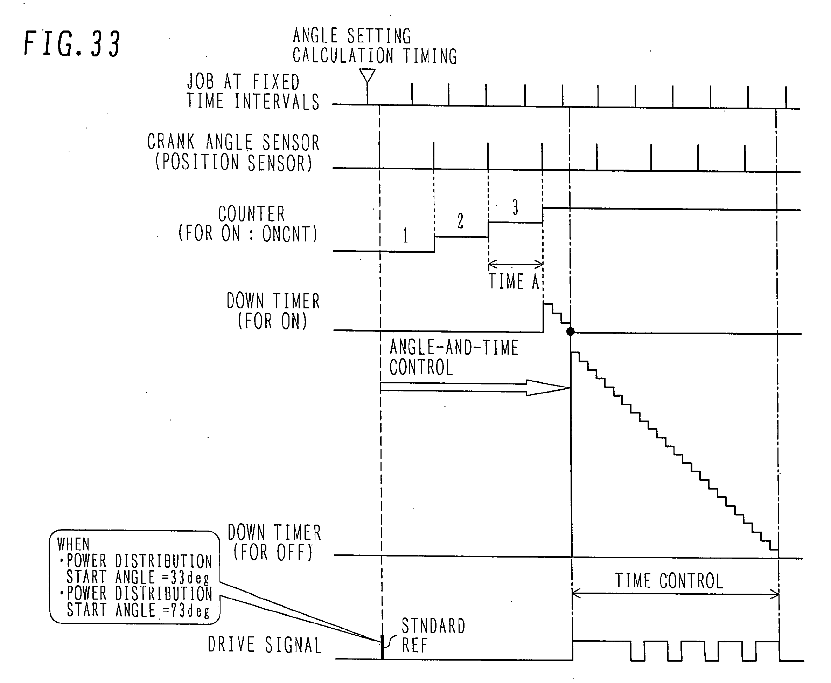

Figs. 32 and 33 show an embodiment that performs the angle-and-time control only for the power distribution start angle and the time control for the power distribution end angle. The present embodiment ensures the control accuracy by performing the angle-and-time control only for the most important parameter, or the power distribution start angle. The embodiment shown in Figs. 32 and 33 is suitable when the calculation load of the MPU 603 in the control unit 515 is to be restrained.

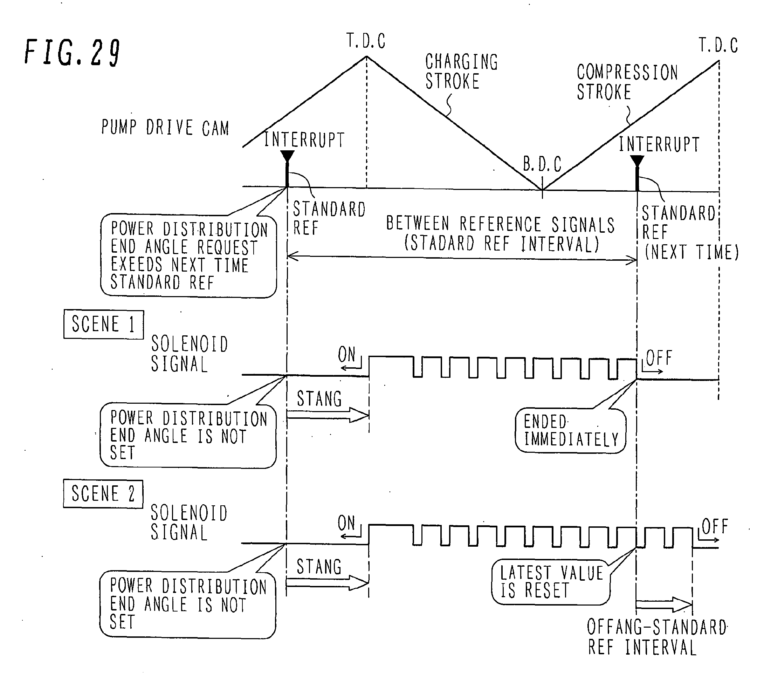

Fig. 29 is a time chart of a case where an interruption of a standard REF, which is pump control angle setup timing, occurs during power distribution. In scene 1, the power distribution end angle OFFANG requested at the time of the next standard REF is equal to or less than the standard REF interval. In this case, power distribution is immediately ended with the next standard REF in order to satisfy the request.

In scene 2, a request for the power distribution end angle OFFANG to be used for setup is equal to or larger than the standard REF interval at the time of the next standard REF. In this case, an angle calculated by subtracting the standard REF interval from OFFANG (for example, 90 degrees) is set. This makes it possible to reflect the latest operating condition to improve the control accuracy.

If an interruption of the next standard REF occurs during power distribution, as shown in Fig. 29, it can be distinguished at the time of the first standard REF (after setup); therefore, the angle-and-time control for power distribution end is not performed at the time of the first standard REF (after setup). This method makes it only necessary to set at most one power distribution start timing and one power distribution end timing at the time of each standard REF, thus contributing to the simplification of the control logic and the reduction of the calculation load.

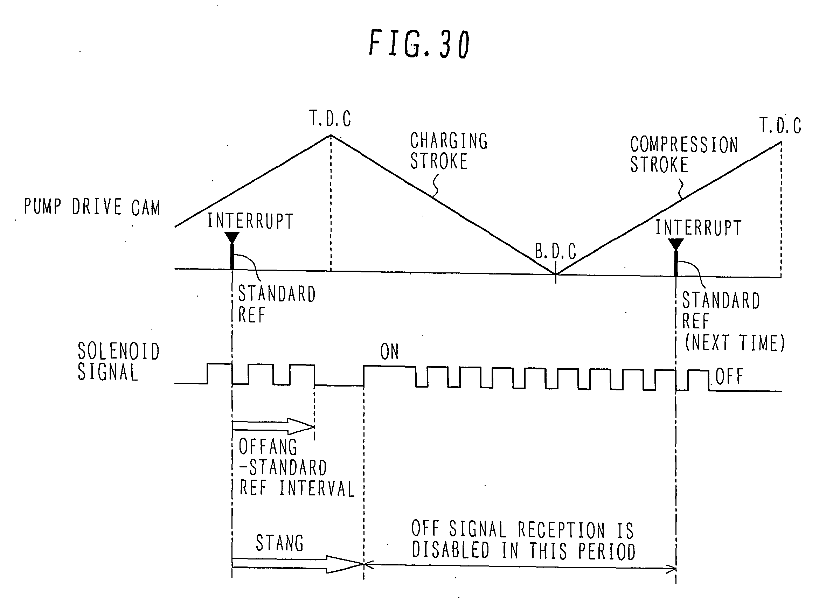

Fig. 30 is a time chart showing measures for a case of a reversed setup when one power distribution start timing and one power distribution end timing are set based on the angle-and-time control from the time of the standard REF. When two of the angle-and-time controls are used together, the order of control starts may be reversed due to the noise of a crank angle signal, etc. In the case of the state shown in Fig. 30, the power distribution end timing exists before the power distribution start timing. If a power distribution end request occurs between the power distribution start timing and the next standard REF, the request is judged to be incorrect control due to noise, etc., and the power distribution end request is not accepted because of the possibility that the pump may perform full discharge if the power is not distributed.

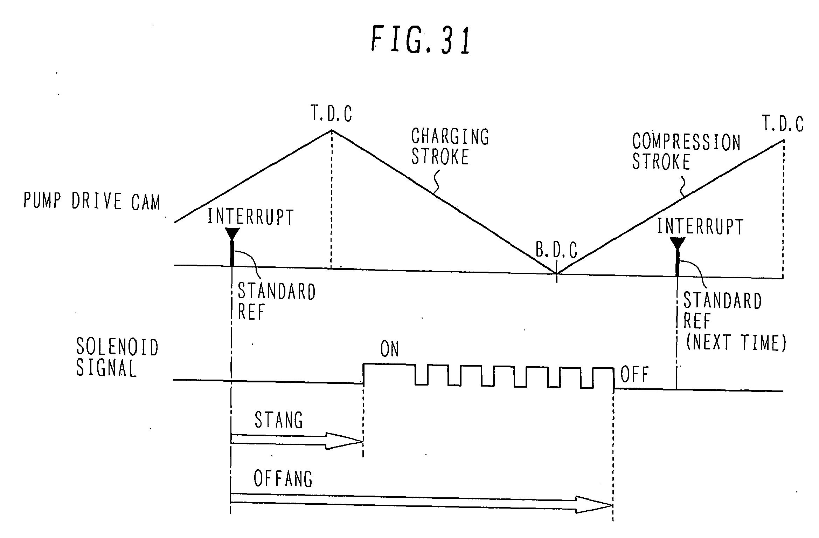

On the other hand, in the case of the state shown in Fig. 31, the power distribution end timing exists after the power distribution start timing. If a power distribution start request occurs between the power distribution end control and the next standard REF, the request is judged to be incorrect control due to noise, etc.; however, the power distribution start request is accepted in order to avoid full discharge due to the non-power distribution state.

Further, as another form of the above-mentioned measure (2), the amount of calculation of the MPU 603 at the time of a standard REF is restrained. If there is much amount of calculation at the time of the standard REF, it may take time to make angle setup, and the angle setup may thus be too late for request output start timing. Therefore, the amount of calculation of the MPU 603 at the time of a standard REF interruption is controlled by calculating the power distribution start angle STANG, the power distribution end angle OFFANG, the first power distribution time TPUMON, the duty ratio PUMDTY, etc., which are all request values for the pump driving signal, at fixed time intervals (for example, 10-millisecond intervals).

As mentioned above, the embodiments of the present invention perform the following functions by means of the above-mentioned configuration.

The control unit 515 according to the present embodiments is a high-pressure fuel pump control device of a direct injection engine 507 comprising: an injector 54 provided in a cylinder 507b; a high-pressure fuel pump 1 having a normal-close type charging valve which transfers fuel to the injector 54; a common rail 53; and a fuel pressure sensor 56, wherein a appropriate phase for a power distribution start/end request is calculated by the phase calculation unit in the control device and power distribution is started or ended by the driving signal output unit in the control device according to the requested phase, thus stabilizing the fuel system and combustion and improving emission gas performance.

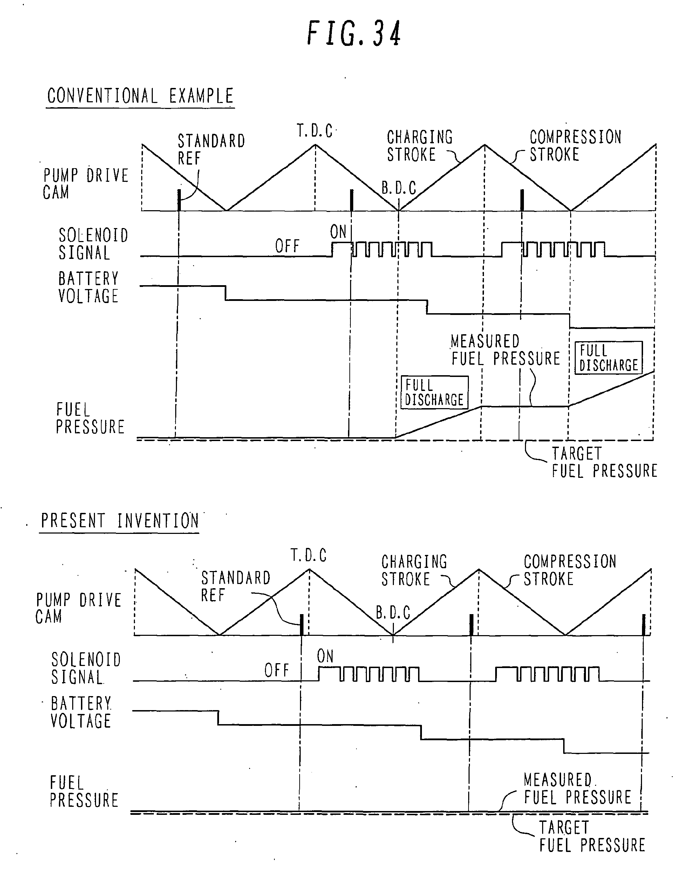

Fig. 34 shows an exemplary effect of the present embodiments. Fig. 34 is a diagram showing a time chart for a control device according to the present embodiments and a time chart for a conventional technique. With the conventional technique, an interval between the power distribution start angle and the standard REF is larger; therefore, an operating condition recognized at the time of a standard REF (angle setup point) may differ from that at the start of power distribution (shown as battery voltage in Fig. 34). In this case, an unexpected pressure rise may occur.

In accordance with the present embodiments, by bringing the standard REF and power distribution start timing closer to each other, it becomes possible to almost equalize an operating condition recognized at the time of a standard REF and that at the start of power distribution, enabling stable control of the discharge quantity up to high rotational speeds. This makes it possible to further stabilize the fuel system and combustion and improve emission gas performance.

Although the embodiments of the present invention have been explained in detail above, the present invention is not limited thereto but may be modified in diverse ways in design without departing from the spirit thereof described in the appended claims.

Further, as still another embodiment, the present invention provides a control device which controls a pump comprising: a fluid charging passage; a fluid discharging passage; a pressurized chamber which connects the charging passage and the discharging passage; a pressing member which transfers the fluid in the pressurized chamber to the discharging passage; a discharging valve provided in the discharging passage; and a solenoid valve which opens at the time of power distribution, the solenoid valve being provided in the charging passage, wherein the control device includes a phase calculation unit which calculates a power distribution start angle at which the opening of the solenoid valve is requested by use of a certain standard signal during the compression stroke of the pump and a driving signal output unit which outputs a driving signal for driving the solenoid valve based on the power distribution start angle.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

**Claims**

1. A high-pressure fuel control device for an internal combustion engine, which controls a pump,
   wherein the pump comprises:

   a fluid charging passage (10);
   a fluid discharging passage (11);
   a pressurized chamber (12) for connecting the charging passage (10) and the discharging passage (11);
   a pressing member (2) for transferring the fluid in the pressurized chamber (12) to the discharging passage (11);
   a discharging valve (8) provided in the discharging passage (11); and
   a solenoid valve (8) for opening at the time of power distribution, the solenoid valve being provided in the charging passage (10); and

   wherein an ON signal for opening the solenoid valve (8) is outputted based on a standard signal generated in the compression stroke of the pump.

2. The control device according to Claim 1, wherein

   a standard signal for ending the drive of the solenoid valve (8) is the same as a standard signal for the power distribution start signal.

3. The control device according to Claim 1 or 2, wherein

   a phase range for a driving signal request falls within a range between standard signals for outputting the ON signal.

4. The control device according to Claim 1 or 2, wherein

   a phase range for a driving signal off compulsory request falls within a range between standard signals for outputting the ON signal.

5. The control device according to at least one of the preceding claims, wherein

   a signal at the most advanced angle phase within a phase range for a driving signal request is used as a standard signal for outputting the ON signal.

6. The control device according to at least one of the Claims 1-4, wherein

   a signal at the most advanced angle phase within a phase range for a driving signal off compulsory request is used as a standard signal for outputting the ON signal.

7. The control device according to at least one of the Claims 1-6, wherein

   there is no clearance signal of a crank angle sensor (516) within a phase range for a driving signal request and/or a phase range for a driving signal off compulsory request.

8. The control device according to at least one of the Claims 1-7, wherein

   an ON signal is outputted based on a crank signal outputted at predetermined crank angle intervals from a crank angle sensor (516) and driving output is ended based on the crank signal.

9. The control device according to at least one of the Claims 1-7, wherein

    an ON signal is outputted based on a crank signal outputted at predetermined crank angle intervals from a crank angle sensor (516) and driving output is ended after a predetermined time.

10. The control device according to Claim 8, wherein

    when a standard signal for setting a driving signal end phase is recognized during ON signal output, an end phase is reset at the standard signal timing.

11. The control device according to Claim 8, 9 or 10 wherein

    when a power distribution end request occurs at a different phase from a request of the control device during ON signal output, the request is not accepted.

12. The control device according to at least one of the preceding claims, wherein

    a request value for the driving signal is calculated at fixed time intervals.

13. A high-pressure fuel pump control device of an internal combustion engine, which controls a pump, wherein the pump comprises:

    a fluid charging passage (10);
    a fluid discharging passage (11);
    a pressurized chamber (12) for connecting the charging passage (10) and the discharging passage (11);
    a pressing member (2) for transferring the fluid in the pressurized chamber (12) to the discharging passage(11);
    a discharging valve (6) provided in the discharging passage (11); and
    a solenoid valve (8) for opening at the time of power distribution, the solenoid valve (8) being provided in the charging passage (10); and

    wherein, a request value for the driving signal of the solenoid valve (8) is recalculated before specified timing of a phase at which an ON signal and/or an OFF signal is to be outputted.

14. The control device according to Claim 13, wherein

    a cam angle sensor output signal is at T.D.C. of a cam for driving the pump.

15. A high-pressure fuel pump control device of an internal combustion engine, which controls a pump, wherein the pump comprises:

    a fluid charging passage (10);
    a fluid discharging passage (11);
    a pressurized chamber (12) for connecting the charging passage (10) and the discharging passage (11);
    a pressing member (2) for transfers the fluid in the pressurized chamber (12) to the discharging passage (11);
    a discharging valve (6) provided in the discharging passage (11); and
    a solenoid valve (8) for opening at the time of power distribution, the solenoid valve (8) being provided in the charging passage (10); and

    wherein the control device includes a phase calculation unit which calculates a power distribution start angle at which the opening of the solenoid valve (8) is requested and a driving signal output unit which outputs a driving signal for driving the solenoid valve (8) based on the power distribution start angle, and
    wherein the power distribution start angle is calculated based on a predetermined standard signal inputted to the control device.

16. The control device according to Claim 15, wherein

    a signal generated in the compression stroke of the pump is used as the predetermined standard signal.

**17.** The control device according to Claim 15, wherein

the predetermined standard signal is a signal from a crank angle sensor (516).

**18.** The control device according to Claim 16, wherein

the driving signal is outputted in the charging stroke that follows the compression stroke during which the standard signal is generated.

# FIG.1

# FIG.2

| | 602 | | 603 | | 604 |
|---|---|---|---|---|---|

EP-ROM → MPU ← → RAM

601

CRANK ANGLE SENSOR 516
(POSITION SENSOR) →

CRANK ANGLE SENSOR 511
(PHASE SENSOR) →

FUEL PRESSURE
SENSOR 56 →

WATER TEMPERATURE
SENSOR 517 →

THROTTLE SENSOR 504 →

AIR-FUEL RATIO
SENSOR 518 →

IGNITION SWITCH →

AIR FLOW SENSOR 503 →

I/O
LSI

→ HIGH-PRESSURE PUMP
SOLENOID 200

→ LOW-PRESSURE
FUEL PUMP 51

→ INJECTOR 54

→ INJECTOR 54

→ IGNITION COIL 522

→ ELECTRONIC
THROTTLE 505a

# FIG.3

POSITION SENSOR SIGNAL

PHASE SENSOR SIGNAL

AIR FLOW SENSOR SIGNAL

SOLENOID CONTROL SIGNAL

CONTROL UNIT

515

# FIG.4

# FIG.5

EP 1 967 721 A2

|  | COMPRESSION STROKE | CHARGING STROKE | COMPRESSION STROKE |
|---|---|---|---|

PLUNGER DISPLACEMENT

T.D.C

DISCHARGE

B.D.C

DISCHARGE

SOLENOID VALVE DRIVE SIGNAL

ON TIME

ON

OFF

OFF TIME

SOLENOID VALVE DRIVE CURRENT

VALVE RESPONSE TIME

VALVE DISPLACEMENT

OPEN

CLOSE

# FIG. 6

# FIG.7

Block diagram:

**702** — TARGET FUEL PRESSURE CALCULATION UNIT
Inputs: OPERATING STATE
Graph: LOAD (vertical) vs ROTATIONAL SPEED (horizontal)
Output: TARGET PRESSURE

**701** — FUEL PRESSURE INPUT PROCESSING UNIT
Input: PRESSURE SENSOR SIGNAL
Output: MEASURED FUEL PRESSURE

**703** — PUMP CONTROL ANGLE CALCULATION UNIT
Inputs: MEASURED FUEL PRESSURE, TARGET PRESSURE
Outputs: POWER DISTRIBUTION START ANGLE (STANG), POWER DISTRIBUTION END ANGLE (OFFANG)

**704** — PUMP CONTROL DUTY CALCULATION UNIT
Inputs: OPERATING STATE
Outputs: FIRST POWER DISTRIBUTION TIME, DUTY RATIO

**705** — PUMP STATE TRANSITION DETERMINATION UNIT
Inputs: OPERATING STATE
Output: CONTROL STATE

**706** — SOLENOID DRIVE UNIT

EP 1 967 721 A2

# FIG. 8

OPERATING
STATE

OPERATING
STATE

801

POWER DISTRIBUTION
START ANGLE CALCULATION
UNIT

802

POWER DISTRIBUTION
END ANGLE CALCULATION
UNIT

POWER DISTRIBUTION
START ANGLE
(STANG)

POWER DISTRIBUTION
END ANGLE
(OFFANG)

PUMP CONTROL ANGLE
CALCULATION UNIT

703

# FIG.9

VARIABLE VALVE TIMING
OPERATION ANGLE
(EXCAMADV)

ROTATIONAL
SPEED

BATTERY
VOLTAGE

901 — BASIC POWER
DISTRIBUTION
START ANGLE
CALCULATION
MAP

BATTERY
VOLTAGE

ROTATIONAL
SPEED

BASIC POWER
DISTRIBUTION
START ANGLE
(STANGMAP)

POWER
DISTRIBUTION
START ANGLE
(STANG)

POWER DISTRIBUTION START ANGLE
CALCULATION UNIT

801

23

# FIG.10

PLUNGER DISPLACEMENT

SOLENOID VALVE DRIVE SIGNAL

SOLENOID VALVE DRIVE CURRENT

VALVE DISPLACEMENT

MOST ADVANCED ANGLE SIDE WHEN THERE ARE CAM ANGLE VARIATIONS UPON CAM ATTACHMENT (SOLID LINE)

CAM ATTACHMENT (MEDIAN VALUE)

T.D.C

B.D.C

ON

OFF

POWER DISTRIBUTION START ANGLE STANG [deg]

CURRENT VALUE FOR GENERATING A FORCE THAT CAN OPEN SOLENOID VALVE (DEPENDING ON ROTATIONAL SPEED)

OPEN

CLOSE

EP 1 967 721 A2

# FIG.11

POWER DISTRIBUTION END ANGLE CALCULATION UNIT

802

1102 — FUEL PRESSURE F/B CONTROL CALCULATION UNIT

1101 BASIC ANGLE MAP

INJECTION QUANTITY

ROTATIONAL SPEED

TARGET FUEL PRESSURE

ACTUAL FUEL PRESSURE

BASIC ANGLE (BASANG)

PI CONTROL

F/B QUANTITY (FBGAIN)

REFERENCE ANGLE (REFANG)

ROTATIONAL SPEED

REFANG

BATTERY VOLTAGE

ROTATIONAL SPEED

VARIABLE VALVE TIMING OPERATION ANGLE

1104 COMPULSORY OFF TIMING MAP

1103 VALVE CLOSE DELAY CALCULATION MAP

PUMDLY

COMPULSORY OUTPUT OFF ANGLE (CPOFFANG)

1105 — OUTPUT OFF ANGLE CALCULATION

POWER DISTRIBUTION END ANGLE (OFFANG)

EP 1 967 721 A2

# FIG.12

HIGH-PRESSURE FUEL PUMP
DISCHARGE QUANTITY

ROTATIONAL SPEED
(LOW SPEED)

REQUESTED FUEL
INJECTION QUANTITY

ROTATIONAL SPEED
(HIGH SPEED)

0

CHARGING VALVE
CLOSING TIMING

PLUNGER
B.D.C

REQUESTED VALVE
CLOSING TIMING
(AT HIGH ROTATIONAL
SPEED)

REQUESTED VALVE
CLOSING TIMING
(AT LOW ROTATIONAL
SPEED)

PLUNGER
T.D.C

EP 1 967 721 A2

# FIG.13

PLUNGER
DISPLACEMENT

T.D.C

B.D.C

SOLENOID VALVE
DRIVE SIGNAL

ON

OFF

CPOFFANG

SOLENOID VALVE
DRIVE CURRENT

VALVE
DISPLACEMENT

OPEN

CLOSE

# FIG.14

705

PUMP CONTROL STATE
CALCULATION UNIT

RESET ~1401

1402

A CONTROL
(NON-POWER
DISTRIBUTION
CONTROL)
PUMPMD=0

FULL DISCHARGE
AS DEFAULT

CONDITION 1
SATISFIED

DISCHARGE PREVENTED
BEFORE DETERMINATION
OF CYLINDER

CONDITION 2
SATISFIED

B CONTROL
(CONTINUAL
CONTROL)
PUMPMD=1
~1403

CONDITION 4
SATISFIED

CONDITION 3
SATISFIED

TO TARGET FUEL PRESSURE
AFTER DETERMINATION
OF CYLINDER

CONDITION 7
SATISFIED

F/B CONTROL
PUMPMD=2
~1404

CONDITION 6
SATISFIED

CONDITION 5
SATISFIED

CONDITION 7
SATISFIED

F/C-PERIOD
CONTROL
(DISCHARGE DISABLING
CONTROL)
~1405

DISCHARGE DISABLED BY
POWER DISTRIBUTION
CONTROL

28

FIG.15

PLUNGER
DISPLACEMENT

T.D.C                    T.D.C

STANDARD
REF                                    B.D.C

CURRENT
WAVEFORM

POWER
DISTRIBUTION
SIGNAL

ON ↑                    ↓OFF

TPUMON [ms]
(FIRST POWER
DISTRIBUTION
TIME)                    PUMDTY [%]
(PUMP POWER
DISTRIBUTION
POWER DISTRIBUTION       DUTY RATIO)
START ANGLE
STANG [deg]

(POWER DISTRIBUTION END ANGLE)
OFFANG [deg]

(COMPULSORY POWER DISTRIBUTION END ANGLE)
CPOFFANG [deg]

EP 1 967 721 A2

# FIG.16

EXCAMADV
(VARIABLE VALVE TIMING
OPERATION ANGLE)

CAM POSITION AT ZERO
OPERATING ANGLE

DIRECTION OF VARIABLE
VALVE TIMING OPERATION

PLUNGER
DISPLACEMENT

SOLENOID
SIGNAL

STANDARD
REF

ON

OFF

SOLENOID
MOVEMENT

OPEN

CLOSE

MNTEF#
(ROM)

STANG [deg]
(POWER DISTRIBUTION
START ANGLE)

REFANG [deg]
(REFERENCE ANGLE)

EXCAMADV [deg]

BASANG [deg]
(BASIC ANGLE)

FBGAIN
(F/B ANGLE)

PUMDLY [deg]
(PUMP VALVE
CLOSE DELAY)

OFFANG [deg]
(POWER DISTRIBUTION END ANGLE)

FORMULA : OFFANG=REFANG+EXCAMADV-PUMDLY

EP 1 967 721 A2

# FIG.17

(1) A CONTROL

PLUNGER
DISPLACEMENT

T.D.C

B.D.C

SOLENOID
SIGNAL

(2) B CONTROL

PLUNGER
DISPLACEMENT

T.D.C

B.D.C

SOLENOID
SIGNAL

INITIAL STADARD REF

(3) FEEDBACK
CONTROL

PLUNGER
DISPLACEMENT

T.D.C

B.D.C

SOLENOID
SIGNAL

STANDARD REF

OFF TIMING

(4) F/C-PERIOD
CONTROL

PLUNGER
DISPLACEMENT

T.D.C

B.D.C

SOLENOID
SIGNAL

STANDARD REF

COMPULSORY
OFF TIMING

31

# FIG.18

BATTERY    ROTATIONAL           BATTERY    ROTATIONAL
BOLTAGE    SPEED                BOLTAGE    SPEED

1801 ‿ FIRST POWER             1802 ‿ DUTY RATIO
        DISTRIBUTION                   MAP
        TIME MAP

        FIRST POWER                    DUTY RATIO
        DISTRIBUTION                   (PUMDTY)
        TIME
          (TPUMON)

        PUMP CONTROL DUTY
        CALCULATION UNIT

                        704

# FIG.19

CLANK ANGLE
SENSOR
(POSITION
SENSOR)

ENGINE
STARTED

CLEARANCE

INITIAL
CREARANCE
RECOGNIZED

PLUNGER
DISPLACEMENT

COMPRESSION
STROKE

CHARGING
STROKE

INITIAL
STANDARD
REF

STANDARD
REF

EP 1 967 721 A2

# FIG.20

VARIABLE VALVE TIMING
OPERATION ANGLE
(MAXIMUM VALUE)

DIRECTION OF VARIABLE
VALVE TIMING OPERATION
(RETARD ANGLE DIRECTION)

CAM POSITION AT ZERO
OPERATING ANGLE

T.D.C

PLUNGER
DISPLACEMENT

VARIATION

B.D.C

STANDARD
REF
(REFERENCE
SIGNAL)

SETUP RANGE OF POWER
DISTRIBUTION START
ANGLE

SETUP RANGE OF POWER
DISTRIBUTION START
ANGLE
(INCLUDING VARIABLE
VALVE TIMING
OPERATION)

MOST ADVANTED
ANGLE PHASE

BETWEEN REFERENCE SIGNALS
(BETWEEN STANDARD REFs)(

EP 1 967 721 A2

FIG.21

VARIABLE VALVE TIMING OPERATION ANGLE (MAXIMUM VALUE)

DIRECTION OF VARIABLE VALVE TIMING OPERATION (ADVANCED ANGLE DIRECTION)

CAM POSITION AT ZERO OPERATING ANGLE

T.D.C

B.D.C

PLUNGER DISPLACEMENT

VARIATION

STANDARD REF (REFERENCE SIGNAL)

SETUP RANGE OF POWER DISTRIBUTION START ANGLE

SETUP RANGE OF POWER DISTRIBUTION START ANGLE (INCLUDING VARIABLE VALVE TIMING OPERATION)

MOST ADVANCED ANGLE PHASE

BETWEEN REFERENCE SIGNALS

# FIG.22

VARIABLE VALVE TIMING
OPERATION ANGLE
(MAXIMUM VALUE)

CAM POSITION AT
OPERATING ANGLE    T.D.C

DIRECTION OF VARIABLE
VALVE TIMING OPERATION

PLUNGER
DISPLACEMENT

STANDARD
REF

SETUP RANGE OF POWER
DISTRIBUTION START
ANGLE
(INCLUDING VARIABLE
VALVE TIMING
OPERATION)

B.D.C

SETUP RANGE OF
COMPULSORY OUTPUT
OFF ANGLE

SETUP RANGE OF
COMPULSORY OUTPUT
OFF ANGLE
(INCLUDING VARIABLE
VALVE TIMING OPERATION)

MOST ADVANCED
ANGLE PHASE

BETWEEN REFERENCE SIGNALS

EP 1 967 721 A2

# FIG.23

EP 1 967 721 A2

T.D.C

PLUNGER
DISPLACEMENT

COMPRESSION
STROKE

CHARGING
STROKE

B.D.C

SETUP RANGE OF COMPULSORY
OUTPUT OFF ANGLE (CPOFFANG)

SETUP RANGE OF POWER
DISTRIBUTION START
ANGLE (STANG)

# FIG.24

CALCULATION TIMING AT FIXED TIME INTERVALS

CALCULATION TIMING AT FIXED TIME INTERVALS

RECALCULATION TIMING OF POWER DISTRIBUTION START ANGLE (SET AT STANDARD REF)

POWER DISTRIBUTION START ANGLE SET AT STANDARD REF

RECALCULATION TIMING OF POWER DISTRIBUTION END ANGLE (SET AT STANDARD REF)

POWER DISTRIBUTION END ANGLE SET AT STANDARD REF

CLANK ANGLE SENSOR (POSITION SENSOR)

T.D.C

CHARGING STROKE

COMPRESSION STROKE

PUMP DRIVE CAM

STANDARD REF

B.D.C

SETUP OF
·POWER DISTRIBUTION START ANGLE (TEMPORALY VALUE)·
·RECALCULATION TIMING OF POWER DISTRIBUTION START ANGLE
·POWER DISTRIBUTION END ANGLE (TEMPORALY VALUE)
·RECALCULATION TIMING OF POWER DISTRIBUTION END ANGLE

SOLENOID SIGNAL

ON

OFF

ANGLE CONTROL

ANGLE CONTROL

EP 1 967 721 A2

# FIG.25

CALCULATION TIMING AT FIXED TIME INTERVALS

CALCULATION TIMING AT FIXED TIME INTERVALS

RECALCULATION TIMING OF POWER DISTRIBUTION START ANGLE (SET AT STANDARD REF)

POWER DISTRIBUTION START ANGLE SET AT STANDARD REF

RECALCULATION TIMING OF POWER DISTRIBUTION END ANGLE (SET AT STANDARD REF)

POWER DISTRIBUTION END ANGLE SET AT STANDARD REF

CLANK ANGLE SENSOR (POSITION SENSOR)

T.D.C

CHARGING STROKE

COMPRESSION STROKE

PUMP DRIVE CAM

STANDARD REF

B.D.C

SETUP OF
· POWER DISTRIBUTION START ANGLE (TEMPORALY VALUE)
· RECALCULATION TIMING OF POWER DISTRIBUTION START ANGLE
· POWER DISTRIBUTION END ANGLE (TEMPORALY VALUE)
· RECALCULATION TIMING OF POWER DISTRIBUTION END ANGLE

SOLENOID SIGNAL

ON

OFF

EP 1 967 721 A2

# FIG.26

CLANK ANGLE
SENSOR
(POSITION
SENSOR)

PUMP DRIVE CAM

T.D.C    CHARGING
STROKE

COMPRESSION
STROKE

B.D.C

STANDARD
REF

STANDARD
REF

SOLENOID
SIGNAL

ON ↑

OFF

ANGLE-AND-TIME
CONTROL

ANGLE-AND-TIME
CONTROL

EP 1 967 721 A2

# FIG.27

EP 1 967 721 A2

# FIG.28

CLANK ANGLE
SENSOR
(COM SENSOR)
PUMP DRIVE
CAM ATTACHMENT

CLANK ANGLE
SENSOR
(POSITION
SENSOR)

COMPRESSION
STROKE

CHARGING
STROKE

T.D.C

PUMP DRIVE CAM

B.D.C

PHASE RANGE FOR
COMPULSORY OUTPUT
OFF REQUEST

PHASE RANGE FOR
POWER DISTRIBUTION
START REQUEST

EP 1 967 721 A2

FIG.29

PUMP DRIVE CAM

T.D.C     CHARGING STROKE     COMPRESSION STROKE     T.D.C

INTERRUPT    B.D.C    INTERRUPT

POWER DISTRIBUTION END ANGLE REQUEST EXEEDS NEXT TIME STANDARD REF

STANDARD REF

BETWEEN REFERENCE SIGNALS (STADARD REF INTERVAL)

STANDARD REF (NEXT TIME)

SCENE 1

SOLENOID SIGNAL

ON

POWER DISTRIBUTION END ANGLE IS NOT SET

STANG

OFF

ENDED IMMEDIATELY

SCENE 2

SOLENOID SIGNAL

ON

POWER DISTRIBUTION END ANGLE IS NOT SET

STANG

OFF

LATEST VALUE IS RESET

OFFANG-STANDARD REF INTERVAL

EP 1 967 721 A2

# FIG.30

FIG.31

# FIG.32

CLANK ANGLE
SENSOR
(POSITION
SENSOR)

PUMP DRIVE CAM

T.D.C

CHARGING
STROKE

COMPRESSION
STROKE

T.D.C

B.D.C

STANDARD
REF

STANDARD
REF

SOLENOID
SIGNAL

ON ↑

OFF

ANGLE-AND-TIME
CONTROL

TIME CONTROL

EP 1 967 721 A2

# FIG.33

ANGLE SETTING CALCULATION TIMING

JOB AT FIXED TIME INTERVALS

CRANK ANGLE SENSOR (POSITION SENSOR)

COUNTER (FOR ON : ONCNT)

1    2    3

TIME A

DOWN TIMER (FOR ON)

ANGLE-AND-TIME CONTROL

DOWN TIMER (FOR OFF)

WHEN
·POWER DISTRIBUTION START ANGLE =33deg
·POWER DISTRIBUTION START ANGLE =73deg

DRIVE SIGNAL

STNDARD REF

TIME CONTROL

EP 1 967 721 A2

# FIG.34

CONVENTIONAL EXAMPLE

PRESENT INVENTION

**EP 1 967 721 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006250086 A